(19) **Europäisches Patentamt**
**European Patent Office**
**Office européen des brevets**

(11) **EP 4 202 768 A1**

(12) **EUROPEAN PATENT APPLICATION**
published in accordance with Art. 153(4) EPC

(43) Date of publication:
**28.06.2023 Bulletin 2023/26**

(21) Application number: **21868262.3**

(22) Date of filing: **20.07.2021**

(51) International Patent Classification (IPC):
**G06N 3/04** (2023.01)

(52) Cooperative Patent Classification (CPC):
**G06F 18/00; G06N 3/04; G06N 20/00; H04L 67/02**

(86) International application number:
**PCT/CN2021/107391**

(87) International publication number:
**WO 2022/057433 (24.03.2022 Gazette 2022/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.09.2020 CN 202010989062**

(71) Applicant: **Huawei Technologies Co., Ltd.
Shenzhen, Guangdong 518129 (CN)**

(72) Inventors:
• **SHAO, Yunfeng
  Shenzhen, Guangdong 518129 (CN)**
• **SONG, Shaoming
  Shenzhen, Guangdong 518129 (CN)**
• **LI, Wenpeng
  Shenzhen, Guangdong 518129 (CN)**
• **GUO, Kaiyang
  Shenzhen, Guangdong 518129 (CN)**
• **QIAN, Li
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **MACHINE LEARNING MODEL TRAINING METHOD AND RELATED DEVICE**

(57) A machine learning model training method and a related device are provided, and relate to the artificial intelligence field. The method is applied to a first client, a plurality of clients are communicatively connected to a server, the server stores a plurality of modules, and the plurality of modules are configured to construct at least two machine learning models. The method includes: obtaining a first machine learning model, where at least one first machine learning model is selected based on a data feature of a first training data set stored in the first client; performing a training operation on the at least one first machine learning model by using the first data set, to obtain at least one trained first machine learning model; and sending at least one updated module to the server, where the updated module is used by the server to update weight parameters of the stored modules. Different neural networks are allocated to training data with different data features, so that personalized matching between the neural networks and the data features is implemented.

First client — Server

401: Receive a plurality of neural network modules sent by the server, and construct at least two second neural networks based on the plurality of neural network modules

402: Select at least one first neural network from the at least two second neural networks

403: Calculate an adaptation value between a first data set and a first neural network

404: Perform a training operation on the first neural network by using the first data set, to obtain a trained first neural network

405: At least one updated neural network module included in at least one trained first neural network

406: Update weight parameters of the stored neural network modules

FIG. 4

## Description

This application claims priority to Chinese Patent Application No. 202010989062.5, filed with the China National Intellectual Property Administration on September 18, 2020 and entitled "MACHINE LEARNING MODEL TRAINING METHOD AND RELATED DEVICE", which is incorporated herein by reference in its entirety.

## TECHNICAL FIELD

This application relates to the artificial intelligence field, and in particular, to a machine learning model training method and a related device.

## BACKGROUND

Artificial intelligence (Artificial Intelligence, AI) simulates, extends, and expands human intelligence by using a computer or a machine controlled by a computer. Artificial intelligence includes studying design principles and implementation methods of various intelligent machines, so that the machines have perception, inference, and decision-making functions. At present, as users are increasingly willing to protect personal privacy data, user data between data owners cannot be exchanged. Consequently, "data silos" of large and small sizes are formed. The "data silos" pose new challenges to artificial intelligence that is based on massive data.

For existence of the "data silos", federated learning (federated learning) is proposed. To be specific, different clients train a same neural network by using locally stored training data and send a trained neural network to a server, and the server aggregates parameter update statuses. However, because data features of the training data stored in the different clients are different, in other words, optimization objectives of the different clients are different, and clients selected in each round of training are not completely the same, optimization objectives of each round of training may also be different. Consequently, a training process of the neural network cannot be converged, and training effect is poor.

## SUMMARY

Embodiments of this application provide a machine learning model training method and a related device. Different neural networks are allocated to training data with different data features, to implement personalized matching between the neural networks and the data features. Each client allocates and trains a neural network based on a data feature of a training data set stored in the client, so that a same neural network can be trained by using training data with a same data feature. This helps improve accuracy of a trained neural network.

To resolve the foregoing technical problem, embodiments of this application provide the following technical solutions.

According to a first aspect, an embodiment of this application provides a machine learning model training method, which may be applied to the artificial intelligence field. The method is applied to a first client. A plurality of clients are communicatively connected to a server, and the server stores a plurality of modules. The plurality of modules are configured to construct machine learning models. The first client is any one of the plurality of clients. The machine learning model may be specifically represented as a neural network, a linear model, or another type of machine learning model. Correspondingly, the plurality of modules forming the machine learning model may be specifically represented as neural network modules, linear model modules, or modules forming the another type of machine learning model. Training of the machine learning model includes a plurality of rounds of iteration. One of the plurality of rounds of iteration includes: The first client obtains at least one first machine learning model, where the at least one first machine learning model is selected based on a data feature of a first data set stored in the first client. Specifically, the first client may receive the plurality of modules sent by the server, and select the at least one first machine learning model from at least two second machine learning models. Alternatively, the first client may receive the at least one first machine learning model sent by the server. The first client performs a training operation on the at least one first machine learning model by using the first data set, to obtain at least one trained first machine learning model. The first client sends at least one updated module included in the at least one trained first machine learning model to the server, where the updated module is used by the server to update weight parameters of the stored modules.

In this implementation, the plurality of neural network modules are stored in the server, and the plurality of neural network modules can form at least two different second neural networks. For one first client in the plurality of clients, at least one first neural network that matches the data feature of the first data set stored in the first client is selected. After training the at least one first neural network by using training data of the first client, the server aggregates parameter update statuses. In the foregoing manner, different neural networks can be allocated to training data with different data features, in other words, personalized matching between the neural networks and the data features is implemented. In addition, because the first client is any one of the plurality of clients, a neural network is allocated and trained for each of the plurality of clients based on a data feature of a training data set stored in the client, so that a same neural network can be trained by using training data with a same data feature, and different neural networks can be trained by using training data with different data features. Therefore, not only personalized matching between the neural networks and the data features is implemented, but also accuracy of a trained neural network is improved.

In a possible implementation of the first aspect, the plurality of modules are configured to construct the at least two second machine learning models, and the at least one first machine learning model is selected from the at least two second machine learning models; or a module configured to construct the at least one first machine learning model is selected from the plurality of modules. In this implementation, two manners of selecting the second machine learning model are provided, thereby improving implementation flexibility of this solution.

In a possible implementation of the first aspect, the machine learning model is a neural network, the plurality of modules stored in the server are neural network modules, the first client stores a first adaptation relationship, the first adaptation relationship includes a plurality of adaptation values, and the adaptation value indicates an adaptation degree between the first data set and a second neural network. Before the first client obtains at least one second machine learning module, the method further includes: The first client receives the plurality of neural network modules sent by the server. That the first client obtains at least one machine learning model includes: The first client selects the at least one first neural network from at least two second neural networks based on the first adaptation relationship, where the at least one first neural network includes a first neural network with a high adaptation value with the first data set. The at least one first neural network with a high adaptation value may be N first neural networks with a highest adaptation value. A value of N is an integer greater than or equal to 1. For example, the value of N may be 1, 2, 3, 4, 5, 6, or another value. This is not limited herein. Alternatively, the at least one first neural network with a high adaptation value may be at least one first neural network with an adaptation value greater than a fourth threshold, and a value of the fourth threshold may be determined based on factors such as a generation manner and a value range of the adaptation value. Optionally, the at least one first neural network further includes a neural network randomly selected by the first client from the at least two second neural networks.

In this implementation, the first adaptation relationship is pre-configured on the first client, so that at least one first neural network with a high adaptation value with the first data set is selected from the at least two second neural networks based on the first adaptation relationship, to ensure that the selected neural network is a neural network adapted to the data feature of the first data set, thereby implementing personalized customization of neural networks of different clients. In addition, selecting the neural network adapted to the data feature of the first data set helps improve accuracy of the trained neural network.

In a possible implementation of the first aspect, because the first adaptation relationship may have a null value, the first client may obtain a first adaptation matrix based on the first adaptation relationship, where each element in the first adaptation matrix represents an adaptation value. When the first adaptation relationship has the null value, the first adaptation relationship may be supplemented in a matrix decomposition manner, and a supplemented first adaptation relationship no longer includes the null value. In this way, the at least one first neural network with a high adaptation value with the first data set may be selected based on the supplemented first adaptation relationship.

In a possible implementation of the first aspect, an adaptation value between the first data set and one second neural network corresponds to a function value of a first loss function, and a smaller function value of the first loss function indicates a larger adaptation value between the first data set and the second neural network. The first loss function indicates a similarity between a prediction result of first data and a correct result of the first data, the prediction result of the first data is obtained based on the second neural network, and the first data and the correct result of the first data are obtained based on the first data set. The first data may be any piece of data in the first data set, or may be at least two data subsets obtained after a clustering operation is performed on the first data set. The first data is a clustering center of any data subset in the at least two data subsets. Further, when the first data is any piece of data in the first data set, because data in the first data set is used to perform a training operation on the first neural network (in other words, the first data set includes first training data), may be further used to test a correctness rate of a trained first neural network (in other words, the first data set may include test data), and may be further used to verify correctness of a hyperparameter in the first neural network (in other words, the first data set may further include verification data), the first data may be data used for training, may be data used for testing, or may be data used for verification.

In this implementation, an adaptation value between the first data set and one first neural network is calculated based on a loss function. This solution is simple, easy to implement, and has high accuracy.

In a possible implementation of the first aspect, an adaptation value between the first data set and one second neural network corresponds to a first similarity, and a larger first similarity indicates a larger adaptation value between the first data set and the second neural network. The first similarity is a similarity between the second neural network and a third neural network, and the third neural network is a neural network with highest accuracy of outputting a prediction result in a previous round of iteration.

In this implementation, because the third neural network is a neural network with highest accuracy of outputting the prediction result in the previous round of iteration, and the third neural network is a neural network that has been trained by using the first data set, in other words, an adaptation degree between the third neural network and the first data set is high, if a similarity between the first neural network and the third neural network is high, it indicates that an adaptation degree between the first neural network and the first data set is high, and an adaptation value is large. Another implementation solution for calculating the adaptation value is provided, and implementation flexibility of this solution is improved.

In a possible implementation of the first aspect, the similarity between the second neural network and the third neural network is determined in any one of the following manners: The first client separately inputs same data to the second neural network and the third neural network, and compares a similarity between output data of the second neural network and output data of the third neural network. Alternatively, the first client calculates a similarity between a weight parameter matrix of the second neural network and a weight parameter matrix of the third neural network. The similarity between the second neural network and the third neural network may be obtained by calculating a Euclidean distance, a Mahalanobis distance, a cosine distance, or a cross entropy between the second neural network and the third neural network, or in another manner.

In this implementation, two manners of calculating the similarity between the first neural network and the third neural network are provided, thereby improving implementation flexibility of this solution.

In a possible implementation of the first aspect, a similarity between output data of the first neural network and output data of the third neural network may be a first similarity between output data of the entire first neural network and output data of the entire third neural network. Alternatively, a similarity between output data of the first neural network and output data of the third neural network may be a similarity between output data of each module in the first neural network and output data of each module in the third neural network. A product of similarities between output data of all the modules is calculated to obtain a similarity between output data of the entire first neural network and output data of the entire third neural network.

In a possible implementation of the first aspect, the machine learning model is a neural network, and the method further includes: The first client receives a selector sent by the server, where the selector is a neural network configured to select, from the plurality of neural network modules, at least one neural network module that matches the data feature of the first data set. The first client inputs training data into the selector based on the first data set, to obtain indication information output by the selector. The indication information includes a probability that each of the plurality of neural network modules is selected, and indicates a neural network module that constructs at least one first neural network. Further, if the plurality of neural network modules include $Z$ neural network modules, the indication information may be specifically represented as a vector including $Z$ elements, and each of the $Z$ elements indicates a probability that one neural network module is selected. The first client receives, from the serving end, the neural network module configured to construct the at least one first neural network.

In this implementation, the training data is input into the selector based on the first data set, to obtain the indication information output by the selector, and the neural network module configured to construct the first neural network is selected based on the indication information. The selector is a neural network configured to select, from the plurality of neural network modules, a neural network module that matches the data feature of the first data set. This provides still another implementation of selecting the neural network module that constructs the first neural network, thereby improving implementation flexibility of this solution. In addition, selection performed by using the neural network helps improve accuracy of a selection process of the neural network module.

In a possible implementation of the first aspect, for a process of inputting the training data into the selector, the first client may input each piece of first training data in the first data set into the selector once, to obtain indication information corresponding to each piece of first training data. Alternatively, the first client may perform a clustering operation on the first data set, and separately input several clustered clustering centers (examples of training data) into the selector, to obtain indication information corresponding to each clustering center. Alternatively, the first client may perform a clustering operation on the first data set, separately sample several pieces of first training data from several clustered data subsets, and separately input sampled first training data (an example of the training data) into the selector, to obtain indication information corresponding to each piece of sampled first training data.

In a possible implementation of the first aspect, for a process of determining, based on the indication information, the neural network module that constructs the at least one first neural network, the first client may initialize an array indicating a quantity of times that each neural network module is selected. An initialized value is 0. The array may alternatively be in a table, a matrix, or another form. After obtaining at least one piece of indication information, for each piece of indication information, for a neural network module whose selection probability is greater than a fifth threshold, the first client increases a quantity of times corresponding to the neural network module in the array by one. After traversing all the indication information, the first client collects, based on the array, statistics about at least one neural network module whose quantity of times of being selected is greater than a sixth threshold, and determines the at least one neural network module as the neural network module configured to construct the at least one first neural network. Alternatively, after obtaining a plurality of pieces of indication information, the first client may further calculate an average value of the plurality of pieces of indication information to obtain a vector including $Z$ elements, where each element in the vector indicates a probability that one neural network module is selected, obtain, from the Z elements, H elements with a maximum average value, and determine H neural network modules to which the H elements point as neural network modules used to construct the at least one first neural network, where Z is an integer greater than 1, and H is an integer greater than or equal to 1.

In a possible implementation of the first aspect, the machine learning model is a neural network, and the plurality of modules stored in the server are neural network modules. After the first client obtains the at least one first machine learning model, the method further includes: The first client calculates an adaptation value between the first data set and each of the at least one first neural network. The first data set includes a plurality of pieces of first training data, and a larger adaptation value between the first training data and the first neural network indicates a greater degree of modifying a weight parameter of the first neural network in a process of training the first neural network by using the first training data. Further, a manner of adjusting the weight parameter of the first neural network includes: adjusting a learning rate, adjusting a coefficient of a penalty item, or another manner. A higher learning rate indicates a greater degree of modifying the weight parameter of the first neural network in one training process, and a lower learning rate indicates a smaller degree of modifying the first neural network in one training process. In other words, a larger adaptation value between the first training data and the first neural network indicates a higher learning rate in a process of training the first neural network by using the first training data. A smaller coefficient of the penalty item indicates a greater degree of modifying the first neural network in one training process, and a larger coefficient of the penalty item indicates a smaller degree of modifying the first neural network in one training process. In other words, a larger adaptation value between the first training data and the first neural network indicates a smaller coefficient of the penalty item in a process of training the first neural network by using the first training data.

In this implementation, because adaptation degrees between different training data in a same client and the first neural network are different, it is unreasonable that the weight parameter of the first neural network is modified by using all the training data with a fixed capability. A larger adaptation value between one piece of first training data and the first neural network indicates that the first neural network should process the first training data more and the weight parameter of the first neural network is modified to a greater degree in a process of training the first neural network by using the first training data. This helps improve training efficiency of the first neural network.

In a possible implementation of the first aspect, that the first client calculates an adaptation value between the first data set and each of the at least one first neural network includes: The first client clusters the first data set to obtain at least two data subsets, where the first data subset is a subset of the first data set, and the first data subset is any one of the at least two data subsets; and the first client generates an adaptation value between the first data subset and one first neural network based on the first data subset and the first loss function, where a smaller function value of the first loss function indicates a larger adaptation value between the first data subset and the first neural network. The first loss function indicates a similarity between a prediction result of first data and a correct result of the first data. The prediction result of the first data is obtained based on the first neural network, and the first data is any piece of data in the first data subset, or the first data is a clustering center of the first data subset. The first data and the correct result of the first data are obtained based on the first data subset, and an adaptation value between the first data subset and the first neural network is determined as an adaptation value between each piece of data in the first data subset and the first neural network.

In this implementation, the first data set is clustered to obtain the at least two data subsets. Adaptation values between different training data in a same data subset and the first neural network are the same, in other words, a same type of training data has a same modification capability for the first neural network, to meet a case in which at least two data subsets with different data features exist in a same client, so as to further improve a personalized customization capability of a neural network, and help improve accuracy of the trained neural network.

In a possible implementation of the first aspect, the machine learning model is a neural network, and the plurality of modules stored in the server are neural network modules. That the first client performs a training operation on the at least one first machine learning model by using the first data set includes: The first client performs a training operation on the first neural network based on a second loss function by using the first data set. The second loss function includes a first item and a second item, the first item indicates a similarity between a first prediction result and the correct result of the first training data, the second item indicates a similarity between the first prediction result and a second prediction result, and the second item may be referred to as a penalty item or a constraint item. Further, the first prediction result is a prediction result that is of the first training data and that is output by the first neural network after the first training data is input into the first neural network, and the second prediction result is a prediction result that is of the first training data and that is output by a fourth neural network after the first training data is input into the fourth neural network. The fourth neural network is a first neural network on which no training operation is performed, in other words, an initial state of a fourth loss function is consistent with an initial state of the second loss function. However, in a process of training the second loss function, a weight parameter of the fourth loss function is not updated.

In this implementation, because the first data set on the first client does not necessarily match the first neural network, in a process of training the first neural network by using the first data set, the second loss function further indicates a similarity between the first prediction result and the second prediction result, to avoid excessive changes to the first neural network in the training process.

In a possible implementation of the first aspect, the first data set includes a plurality of pieces of first training data and a correct result of each piece of first training data. The method further includes: The first client receives the selector sent by the server, where the selector is a neural network configured to select, from the plurality of neural network modules, the at least one first neural network module that matches the data feature of the first data set. That the first client performs a training operation on the at least one first machine learning model by using the first data set includes: The first client inputs the first training data into the selector to obtain the indication information output by the selector, where the indication information includes the probability that each of the plurality of neural network modules is selected, and indicates the neural network module that constructs the first neural network; obtains, based on the plurality of neural network modules, the indication information, and the first training data, a prediction result that is of the first training data and that is output by the first neural network; and performs a training operation on the first neural network and the selector based on a third loss function, where the third loss function indicates a similarity between the prediction result of the first training data and a correct result, and further indicates a dispersion degree of the indication information. The method further includes: The first client sends a trained selector to the server.

In this implementation, when the neural network module that constructs the first neural network is trained, the selector is trained, thereby saving computer resources. The selector is trained by processing data that needs to be processed, thereby helping improve accuracy of the indication information output by the selector.

According to a second aspect, an embodiment of this application provides a machine learning model training method, which may be applied to the artificial intelligence field. The method is applied to a server. The server is communicatively connected to a plurality of clients, and the server stores a plurality of modules. The plurality of modules are configured to construct machine learning models. A first client is any one of the plurality of clients. Training of the machine learning model includes a plurality of rounds of iteration, and one of the plurality of rounds of iteration includes: The server obtains at least one first machine learning model corresponding to the first client, where the first client is one of the plurality of clients, and the at least one first machine learning model corresponds to a data feature of a first data set stored in the first client. The server sends the at least one first machine learning model to the first client, where the at least one first machine learning model indicates the first client to perform a training operation on the at least one first machine learning model by using the first data set, to obtain at least one trained first machine learning model. The server receives, from the first client, at least one updated neural network module included in the at least one trained first machine learning model, and updates weight parameters of the stored neural network modules based on the at least one updated neural network module.

In this implementation, different neural networks can be allocated to training data with different data features, in other words, personalized matching between the neural networks and the data features is implemented. Because the first client is any one of the plurality of clients, a neural network is allocated and trained for each of the plurality of clients based on a data feature of a training data set stored in the client, so that a same neural network can be trained by using training data with a same data feature, and different neural networks can be trained by using training data with different data features. Therefore, not only personalized matching between the neural networks and the data features is implemented, but also accuracy of a trained neural network is improved. The server selects a neural network adapted to each client to avoid sending all the neural network modules to the client, thereby reducing a waste of storage resources of the client, and avoiding occupation of computer resources of the client. This helps improve user experience.

In a possible implementation of the second aspect, the plurality of modules are configured to construct at least two second machine learning models, and the at least one first machine learning model is selected from the at least two second machine learning models; or a module configured to construct the at least one first machine learning model is selected from the plurality of modules.

In a possible implementation of the second aspect, that the server updates weight parameters of the stored neural network modules based on the at least one updated neural network module may include: Because different clients may have same neural network modules, the server performs weighted averaging on weight parameters of the same neural network modules sent by the different clients, and uses a weighted average value as a weight parameter of the neural network module in the server. For neural network modules that do not overlap in different clients, parameters of the neural network modules sent by the clients are directly used as weight parameters of the neural network modules in the server. The same neural network modules mean that the neural network modules have same specific neural networks and are located in a same group.

In a possible implementation of the second aspect, that the server updates weight parameters of the stored neural network modules based on the at least one updated neural network module may include: if training data exists in the server, updating, by using a plurality of updated neural network modules sent by the plurality of clients and according to a model distillation method, the weight parameters of the neural network modules stored in the server. In other words, the training data stored in the server is used to retrain the plurality of neural network modules stored in the server. A purpose of training is to shorten a similarity between output data of the neural network modules stored in the server and output data of the updated neural network modules sent by the client.

In a possible implementation of the second aspect, the machine learning model is a neural network, a plurality of modules stored in the server are neural network modules, the server stores a second adaptation relationship, the second adaptation relationship includes a plurality of adaptation values, and the adaptation value indicates an adaptation degree between training data stored in a client and a second neural network. The method further includes: The server receives an adaptation value that is between the first data set and at least one second neural network and that is sent by the first client, and updates the second adaptation relationship. That the server obtains at least one first neural network includes: The server selects the at least one first neural network from a plurality of second neural networks based on the second adaptation relationship, where the at least one first neural network includes a neural network with a high adaptation value with the first data set. Specifically, the server may obtain a second adaptation matrix corresponding to the second adaptation relationship, and perform matrix decomposition on the second adaptation matrix to obtain a decomposed similarity matrix of the neural network and a similarity matrix of a user. A product of the similarity matrix of the neural network and the similarity matrix of the user needs to be similar to a value of a corresponding location in the second adaptation relationship. Further, the similarity matrix of the neural network is multiplied by the similarity matrix of the user, to obtain a second supplemented matrix, and at least one first neural network with a high adaptation value with the first data set (that is, the first client) is selected based on the second supplemented matrix. Optionally, at least one first neural network selected by the first client may not only include the at least one first neural network with a high adaptation value, but also include the at least one randomly selected first neural network.

In this implementation, the second adaptation relationship is configured on a server side, and the client generates an adaptation value and sends the adaptation value to the client. The server selects, based on the second adaptation relationship, a first neural network adapted to the first client, thereby avoiding occupation of computer resources of the client and avoiding leakage of data of the client.

In a possible implementation of the second aspect, the machine learning model is a neural network, and the plurality of modules stored in the server are neural network modules. The method further includes: The server receives first identification information sent by the first client, where the first identification information is identification information of the first neural network, or the first identification information is identification information of a neural network module that constructs the first neural network. That the server sends the at least one first machine learning model to the first client includes: The server sends, to the first client, the first neural network to which the first identification information points, or sends, to the first client, the neural network module that constructs the first neural network and to which the first identification information points.

In a possible implementation of the second aspect, the machine learning model is a neural network, the plurality of modules stored in the server are neural network modules, and the server is further configured with a selector. The method further includes: The server receives at least one clustering center sent by the first client, and obtains at least one data subset after performing a clustering operation on the first data set, where one clustering center in the at least one clustering center is a clustering center of one data subset in the at least one data subset. That the server obtains at least one first machine learning model corresponding to the first client includes: The server separately inputs the clustering center into the selector to obtain indication information output by the selector, and determines, based on the indication information, a neural network module that constructs at least one first neural network, where the indication information includes a probability that each of the plurality of neural network modules is selected. That the server sends the at least one first machine learning model to the first client includes: The server sends the neural network module that constructs the at least one first neural network to the first client.

In this implementation, the selector is used to perform the selection step of the neural network module, which helps improve accuracy of a selection process. The server performs the selection step, which helps release storage space of the client, and avoids occupation of computer resources of the client. In addition, only the clustering center is sent to the server, to avoid client information leakage as much as possible.

In a possible implementation of the second aspect, the machine learning model is a neural network, and the plurality of modules stored in the server are neural network modules. One neural network is divided into at least two submodules. The neural network modules stored in the server are divided into at least two groups corresponding to the at least two submodules, and different neural network modules in a same group have a same function. After the server updates the weight parameters of the stored neural network modules based on the at least one updated neural network module, the method further includes: The server calculates a similarity between different neural network modules in at least two neural network modules included in a same group, and combines two neural network modules whose similarity is greater than a preset threshold. Specifically, the server may randomly select a neural network module from two different neural network networks. Alternatively, if a second neural network module and a first neural network module are specifically represented as a same neural network, and a difference lies only in weight parameters, the server may further average the weight parameters of the second neural network module and the first neural network module, to generate a weight parameter of a combined neural network module.

In this implementation, two neural network modules whose similarity is greater than the preset threshold are combined, in other words, two redundant neural network modules are combined. This not only reduces difficulty in managing the plurality of neural network modules by the server, but also prevents a client from repeatedly training the two neural network modules whose similarity is greater than the preset threshold, to reduce a waste of computer resources of the client.

In a possible implementation of the second aspect, the different neural network modules include a second neural network module and a first neural network module, and a similarity between the second neural network module and the first neural network module is determined in any one of the following manners: The server separately inputs same data to the second neural network module and the first neural network module, and compares a similarity between output data of the second neural network module and output data of the first neural network module; or calculates a similarity between a weight parameter matrix of the second neural network module and a weight parameter matrix of the first neural network module. A manner of calculating the similarity between the second neural network module and the first neural network module includes but is not limited to: calculating a Euclidean distance, a Mahalanobis distance, a cosine distance, or a cross entropy between the second neural network module and the first neural network module.

In this implementation, two specific implementations of calculating a similarity between two different neural network modules are provided, and a user can flexibly select a manner based on an actual situation, thereby improving implementation flexibility of this solution.

For specific meanings of nouns in the second aspect and the possible implementations of the second aspect of embodiments of this application and beneficial effects brought by each possible implementation, refer to the descriptions in the possible implementations of the first aspect. Details are not described herein again.

According to a third aspect, an embodiment of this application provides a data processing method, which may be applied to the artificial intelligence field. A server obtains at least one third neural network corresponding to a data feature of a second data set stored in a second client, and sends the at least one third neural network to the second client, where the at least one third neural network is used by the client to generate a prediction result of to-be-processed data.

In an implementation of the third aspect, that the server obtains at least one third neural network corresponding to a data feature of a second data set stored in a second client may be in any one or more of the following three manners: The server receives at least one second clustering center, and separately inputs the at least one second clustering center into a selector, to obtain a neural network module configured to construct the at least one third neural network, where each second clustering center is a clustering center of one second data subset, and at least one second data subset is obtained by performing a clustering operation on the second data set. Alternatively, the server selects the at least one third neural network from at least two second neural networks based on identification information of the second client and a second adaptation relationship, where the at least one third neural network includes a neural network highly adapted to the second data set. Alternatively, the server randomly selects the at least one third neural network from a plurality of second neural networks.

For specific implementations of the steps in the third aspect and the possible implementations of the third aspect of embodiments of this application, specific meanings of nouns in each possible implementation, and beneficial effects brought by each possible implementation, refer to the descriptions in the possible implementations of the first aspect. Details are not described herein again.

According to a fourth aspect, an embodiment of this application provides a data processing method, which may be applied to the artificial intelligence field. A second client obtains second identification information corresponding to a data feature of a second data set stored in the second client, and sends an obtaining request to a server. The obtaining request carries the second identification information, and the second identification information is identification information of a third neural network, or the second identification information is identification information of a neural network module that constructs a third neural network. The second client receives one or more third neural networks to which the second identification information points, or receives a neural network module that is used to construct one or more first neural networks and to which the second identification information points.

For specific implementations of the steps in the fourth aspect and the possible implementations of the fourth aspect of embodiments of this application, specific meanings of nouns in each possible implementation, and beneficial effects brought by each possible implementation, refer to the descriptions in the possible implementations of the first aspect. Details are not described herein again.

According to a fifth aspect, an embodiment of this application provides a machine learning model training apparatus, which may be applied to the artificial intelligence field. The apparatus is used in a first client. A plurality of clients are communicatively connected to a server, and the server stores a plurality of modules. The plurality of modules are configured to construct machine learning models, and the first client is any one of the plurality of clients. The machine learning model training apparatus is configured to perform a plurality of rounds of iteration, and the machine learning model training apparatus includes an obtaining unit, a training unit, and a sending unit. In one of the plurality of rounds of iteration, the obtaining unit is configured to obtain at least one first machine learning model, where the at least one first machine learning model is selected based on a data feature of a first training data set stored in the first client, the training unit is configured to perform a training operation on the at least one first machine learning model by using the first data set, to obtain at least one trained first machine learning model, and the sending unit is configured to send at least one updated module included in the at least one trained first machine learning model to the server, where the updated module is used by the server to update weight parameters of the stored modules.

In the fifth aspect of embodiments of this application, the machine learning model training apparatus may be further configured to implement steps performed by the first client in the possible implementations of the first aspect. For specific implementations of some steps in the fifth aspect and the possible implementations of the fifth aspect of embodiments of this application, and beneficial effects brought by each possible implementation, refer to the descriptions in the possible implementations in the first aspect. Details are not described herein again.

According to a sixth aspect, an embodiment of this application provides a machine learning model training apparatus, which may be applied to the artificial intelligence field. The apparatus is used in a server. The server is communicatively connected to a plurality of clients, and the server stores a plurality of modules. The plurality of modules are configured to construct machine learning models, and a first client is any one of the plurality of clients. The machine learning model training apparatus is configured to perform a plurality of rounds of iteration, and the machine learning model training apparatus includes an obtaining unit, a sending unit, and an updating unit. In one of the plurality of rounds of iteration, the obtaining unit is configured to obtain at least one first machine learning model corresponding to the first client, where the first client is one of the plurality of clients, and the at least one first machine learning model corresponds to a data feature of a first data set stored in the first client, the sending unit is configured to send the at least one first machine learning model to the first client, where the at least one first machine learning model indicates the first client to perform a training operation on the at least one first machine learning model by using the first data set, to obtain at least one trained first machine learning model, and the updating unit is configured to receive, from the first client, at least one updated neural network module included in the at least one trained first machine learning model, and update weight parameters of the stored neural network modules based on the at least one updated neural network module.

In the sixth aspect of embodiments of this application, the machine learning model training apparatus may be further configured to implement steps performed by the server in the possible implementations of the second aspect. For specific implementations of some steps in the sixth aspect and the possible implementations of the sixth aspect of embodiments of this application and beneficial effects brought by each possible implementation, refer to the descriptions in the possible implementations in the second aspect. Details are not described herein again.

According to a seventh aspect, an embodiment of this application provides a server. The server may include a processor, the processor is coupled to a memory, and the memory stores program instructions. When the program instructions stored in the memory are executed by the processor, the machine learning model training method according to the first aspect is implemented. Alternatively, when the program instructions stored in the memory are executed by the processor, the machine learning model training method according to the first aspect is implemented. For details in which the processor performs the steps performed by the first client in the possible implementations of the first aspect, or details in which the processor performs the steps performed by the server in the possible implementations of the second aspect, refer to the first aspect or the second aspect. Details are not described herein again.

According to an eighth aspect, an embodiment of this application provides a terminal device. The terminal device may include a processor, the processor is coupled to a memory, and the memory stores program instructions. When the program instructions stored in the memory are executed by the processor, the machine learning model training method according to the first aspect is implemented. For details in which the processor performs the steps performed by the first client in the possible implementations of the first aspect, refer to the first aspect. Details are not described herein again.

According to a ninth aspect, an embodiment of this application provides a computer-readable storage medium. The computer-readable storage medium stores a computer program. When the computer program is run on a computer, the computer is enabled to perform the machine learning model training method according to the first aspect, or the computer is enabled to perform the machine learning model training method according to the second aspect.

According to a tenth aspect, an embodiment of this application provides a circuit system. The circuit system includes a processing circuit. The processing circuit is configured to perform the machine learning model training method according to the first aspect, or the processing circuit is configured to perform the machine learning model training method according to the second aspect.

According to an eleventh aspect, an embodiment of this application provides a computer program. When the computer program is run on a computer, the computer is enabled to perform the machine learning model training method according to the first aspect, or the computer is enabled to perform the machine learning model training method according to the second aspect.

According to a twelfth aspect, an embodiment of this application provides a chip system. The chip system includes a processor, configured to support a training device or an execution device in implementing functions in the foregoing aspects, for example, sending or processing data and/or information in the foregoing methods. In a possible design, the chip system further includes a memory, and the memory is configured to store program instructions and data that are necessary for a server or a communication device. The chip system may include a chip, or may include a chip and another discrete component.

## BRIEF DESCRIPTION OF DRAWINGS

FIG. 1 is a schematic diagram of a structure of an artificial intelligence main framework according to an embodiment of this application;
FIG. 2 is a diagram of a system architecture of a machine model training system according to an embodiment of this application;
FIG. 3 is a schematic diagram of a plurality of different data sets in a machine learning model training method according to an embodiment of this application;
FIG. 4 is a schematic flowchart of a machine learning model training method according to an embodiment of this application;
FIG. 5 is a schematic diagram of a plurality of neural network modules in a machine learning model training method according to an embodiment of this application;
FIG. 6 is another schematic diagram of a plurality of neural network modules in a machine learning model training method according to an embodiment of this application;
FIG. 7 is a schematic diagram of three structures of a second neural network in a machine learning model training method according to an embodiment of this application;
FIG. 8 is a schematic diagram of another structure of a second neural network in a machine learning model training method according to an embodiment of this application;
FIG. 9 is another schematic flowchart of a machine learning model training method according to an embodiment of this application;
FIG. 10 is still another schematic flowchart of a machine learning model training method according to an embodiment of this application;
FIG. 11 is yet another schematic flowchart of a machine learning model training method according to an embodiment of this application;
FIG. 12 is still another schematic flowchart of a machine learning model training method according to an embodiment of this application;
FIG. 13 is a schematic flowchart of a data processing method according to an embodiment of this application;
FIG. 14 is a schematic diagram of a structure of a machine learning model training apparatus according to an embodiment of this application;
FIG. 15 is a schematic diagram of another structure of a machine learning model training apparatus according to an embodiment of this application;
FIG. 16 is a schematic diagram of still another structure of a machine learning model training apparatus according to an embodiment of this application;
FIG. 17 is a schematic diagram of yet another structure of a machine learning model training apparatus according to an embodiment of this application;
FIG. 18 is a schematic diagram of a structure of a training device according to an embodiment of this application;
FIG. 19 is a schematic diagram of a structure of an execution device according to an embodiment of this application; and
FIG. 20 is a schematic diagram of a structure of a chip according to an embodiment of this application.

## DESCRIPTION OF EMBODIMENTS

Embodiments of this application provide a machine learning model training method and a related device. Different neural networks are allocated to training data with different data features, to implement personalized matching between the neural networks and the data features. Each client allocates and trains a neural network based on a data feature of a training data set stored in the client, so that a same neural network can be trained by using training data with a same data feature. This helps improve accuracy of a trained neural network.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

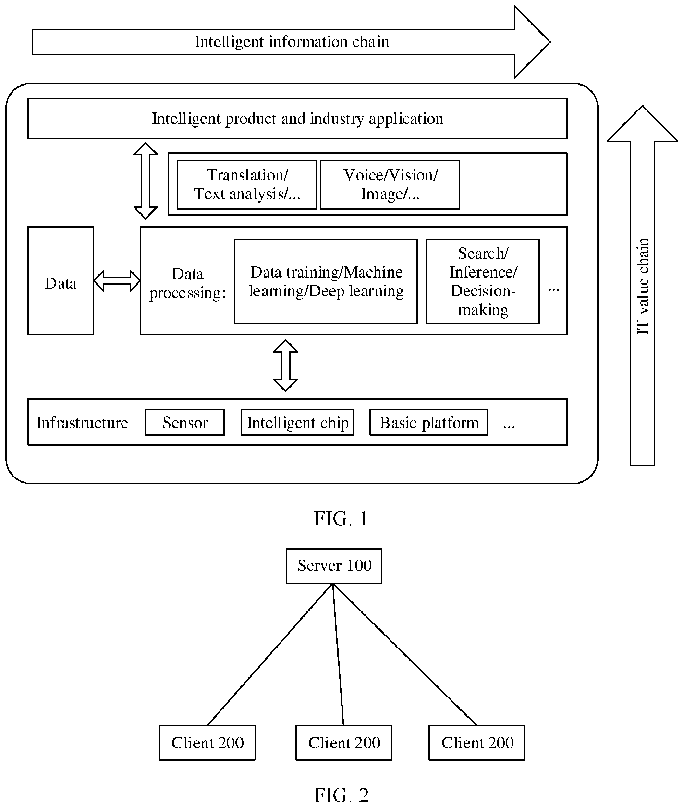

An overall working procedure of an artificial intelligence system is first described. FIG. 1 shows a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides computing capability support for the artificial intelligence system, implements communication with the external world, and implements support by using a basic platform. The infrastructure communicates with the external world by using a sensor. A computing capability is provided by an intelligent chip. For example, the intelligent chip includes but is not limited to a hardware acceleration chip such as a central processing unit (central processing unit, CPU), a neural-network processing unit (neural-network processing unit, NPU), a graphics processing unit (graphics processing unit, GPU), an application-specific integrated circuit (application-specific integrated circuit, ASIC), and a field programmable gate array (field programmable gate array, FPGA). The basic platform includes related platform assurance and support such as a distributed computing framework and a network, and may include cloud storage and computing, an interconnection and interworking network, and the like. For example, the sensor communicates with the external world to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, speech, and text, further relates to internet of things data of a conventional device, and includes service data of an existing system and perception data such as force, displacement, a liquid level, a temperature, and humidity.

(3) Data processing

Data processing usually includes a manner such as data training, machine learning, deep learning, searching, inference, or decision-making.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed by using formal information according to an inference control policy. A typical function is searching and matching.

Decision-making is a process in which a decision is made after intelligent information is inferred, and usually provides functions such as classification, ranking, and prediction.

(4) General capability

After data processing mentioned above is performed on data, some general capabilities may be further formed based on a data processing result, for example, an algorithm or a general system, for example, image classification, image personalized management, battery charging personalized management, text analysis, computer vision processing, and voice recognition.

(5) Intelligent product and industry application

Intelligent products and industry applications are products and applications of the artificial intelligence system in various fields, and are encapsulation for an overall solution of artificial intelligence, to productize intelligent information decision-making and implement applications. Application fields thereof mainly include an intelligent terminal, intelligent manufacturing, intelligent transportation, intelligent home, intelligent healthcare, intelligent security protection, autonomous driving, a safe city, and the like.

Embodiments of this application are mainly used to train a machine learning model used in various application scenarios. The trained machine learning model may be applied to the foregoing various application fields to implement classification, regression, or another function. A processing object of the trained machine learning model may be an image sample, a discrete data sample, a text sample, a speech sample, or the like. Details are not described herein. The machine learning model may be specifically represented as a neural network, a linear model, another type of machine learning model, or the like. Correspondingly, a plurality of modules forming the machine learning model may be specifically represented as neural network modules, linear model modules, or modules forming the another type of machine learning model. Details are not described herein. In subsequent embodiments, only an example in which the machine learning model is represented as a neural network is used for description. When the machine learning model is represented as another type other than the neural network, understanding may be performed by analogy. Details are not described again in embodiments of this application.

Further, embodiments of this application may be applied to two training manners: federated learning and distributed training. For ease of understanding, first refer to FIG. 2. FIG. 2 is a diagram of a system architecture of a machine model training system according to an embodiment of this application. The two training manners, federated learning and distributed training, are first described with reference to FIG. 2. The machine model training system includes a server 100 and a plurality of clients 200, and the server 100 is communicatively connected to the plurality of clients 200. The server 100 may be specifically represented as one server, or may be represented as a server cluster including a plurality of servers. Although FIG. 2 shows only one server 100 and three clients 200, in an actual case, a quantity of servers 100 and a quantity of clients 200 may be determined based on an actual requirement. The client 200 may be configured on a terminal device, or may be configured on the server. This is not limited herein.

Specifically, in a training phase, when the training manner of federated learning is used, the server 100 stores a plurality of neural network modules, and the plurality of neural network modules are configured to construct at least two second neural networks. Each client 200 stores a data set, and the data set stored in the client 200 may be used to perform a training operation on a neural network. A first client in the plurality of clients 200 stores a first data set, and the first client is any one of the plurality of clients 200. In a round of iteration process, the first client obtains at least one first neural network adapted to a data feature of the first data set, performs a training operation on the at least one first neural network by using the first data set, to obtain at least one trained first neural network, and then sends at least one updated neural network module included in the at least one trained first machine learning model to the server 100. Each of the plurality of clients 200 may perform the foregoing operations. In this case, the server 100 may receive a plurality of updated neural network modules sent by the plurality of clients 200, and the server 100 updates weight parameters of the stored neural network modules based on the plurality of received updated neural network modules, to complete the round of iteration process. The weight parameters of the plurality of neural network modules stored in the server 100 are updated by using a plurality of rounds of iteration processes.

A difference between distributed training and federated learning lies in that data used to train a neural network is sent by the server 100 to each client 200. In this training manner of distributed training, in addition to storing the plurality of neural network modules used to construct the at least two second neural networks, the server 100 further stores the data set. The server 100 first performs a clustering operation on the stored data set to obtain a plurality of clustered data subsets, and then the server 100 sends, to each client 200, data subsets corresponding to one cluster or several clusters. In other words, different clients 200 may store data subsets with different data features. Further, for a clustering process, the server 100 may cluster the entire stored data set, or may first classify the entire data set into different data subsets based on a correct label of each piece of data in the data set, and then sequentially perform a clustering operation on each classified data subset, to obtain a plurality of clustered data subsets. For a data distribution step, the server 100 may directly send the clustered data subset to the client 200, or may sample some data from at least one clustered data subset and send sampled data to the client 200. This is not limited herein. After the server 100 deploys, on each client 200, the data used to perform the training operation, the weight parameters of the plurality of neural network modules stored in the server 100 also need to be updated through a plurality of rounds of iteration. An implementation method of each round of iteration process is the same as an implementation method of each round of iteration process in federated learning, and details are not described herein again.

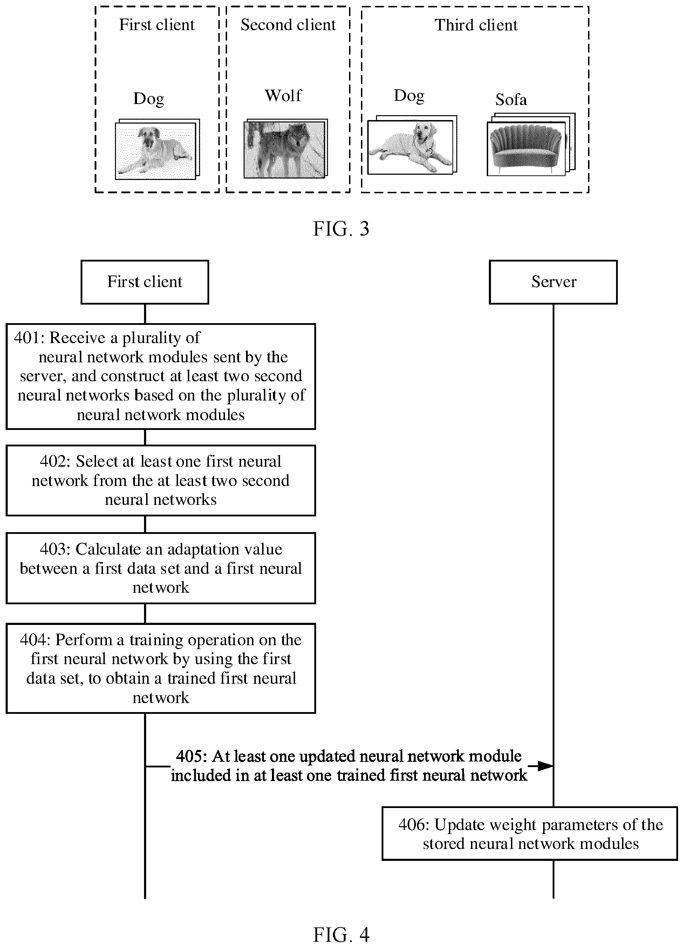

In an inference phase, the client 200 obtains a third neural network corresponding to a data feature of a data set stored in the client 200, and then generates a prediction result of input data by using the obtained neural network. To more intuitively understand a concept of "data feature of the data set", FIG. 3 is a schematic diagram of a plurality of different data sets in a machine learning model training method according to an embodiment of this application. FIG. 3 shows data sets stored in four clients by using examples in which tasks of neural networks are image classification. A data set stored in a first client is an image set of a dog, and a task that needs to be executed by the first client by using a neural network is to classify the dog. A data set stored in a second client is an image set of a wolf, and a task that needs to be executed by the first client by using a neural network is to classify the wolf. A data set stored in a third client includes an image set of a dog and an image set of a sofa, and the third client needs two different neural networks. A task executed by one neural network is to classify the dog, and a task executed by the other neural network is to classify the sofa. Data features of the image set of the dog, the image set of the wolf, and the image set of the sofa are different, and data features of the image set of the dog stored in the first client and the image set of the dog stored in the third client are the same.

The following describes in detail the machine learning model training method provided in this embodiment of this application. Because the method affects both a training phase and an inference phase, and implementation procedures of the training phase and the inference phase are different, the following separately describes specific implementation procedures of the foregoing two phases.

1. Training phase

In this embodiment of this application, a server stores a plurality of neural network modules. In one time of iteration, for a first client in a plurality of clients, at least one first neural network adapted to a first data set needs to be obtained. A selection operation of the at least one first neural network may be performed by the server, or may be performed by the client. Implementation procedures of the foregoing two manners are different. Further, the server or the client may perform the foregoing selection operation based on an adaptation relationship between a neural network and a data set. To be specific, the server or the client first constructs a plurality of second neural networks by using the plurality of neural network modules, and then selects, from the plurality of second neural networks, at least one first neural network adapted to a data feature of a data set stored in one client. Alternatively, the server or the client may use a selector (a neural network) to perform the foregoing selection operation. To be specific, the server or the client first selects, from the plurality of neural network modules by using the selector, at least one neural network module adapted to a data feature of a data set stored in one client, and then constructs at least one first neural network by using the selected neural network module. Implementation procedures of the foregoing two manners are also different, and are separately described below.

(1) The client selects, based on a first adaptation relationship, a first neural network adapted to a data feature of a data set stored in the client.

Specifically, refer to FIG. 4. FIG. 4 is a schematic flowchart of a machine learning model training method according to an embodiment of this application. The method may include the following steps.

401: A first client receives a plurality of neural network modules sent by a server, and constructs at least two second neural networks based on the plurality of neural network modules.

In some embodiments of this application, the server sends the plurality of stored neural network modules to the first client. Correspondingly, the first client receives the plurality of neural network modules, and constructs the at least two second neural networks based on the plurality of neural network modules. The plurality of neural network modules may be pre-trained neural network modules, or may be completely untrained neural network modules.

Each of the at least two second neural networks may be divided into at least two submodules, and the plurality of neural network modules include at least two groups corresponding to the at least two submodules. Different groups may include a same quantity of neural network modules, or may include different quantities of neural network modules. Different neural network modules in a same group have a same function. For example, functions of neural network modules in a same group are all feature extraction, or functions of neural network modules in a same group are all feature transformation, or functions of neural network modules in a same group are all classification. Details are not described herein. Optionally, in a plurality of rounds of iterative training processes, the server may add a new neural network module to the plurality of neural network modules, or may perform a deletion operation on the plurality of neural network modules.

Different neural network modules may be represented as different neural networks. For example, a first group includes three neural network modules, a first neural network module uses a three-layer multilayer perceptron (multilayer perceptron, MLP), a second neural network module uses a two-layer MLP, and a third neural network module uses a two-layer convolutional neural network (convolutional neural network, CNN). Alternatively, different neural network modules may be a same neural network, but have different weight parameters. For example, a first group includes three neural network modules, a first neural network module uses a two-layer multilayer perceptron (multilayer perceptron, MLP), a second neural network module uses a two-layer MLP, and a third neural network module uses a two-layer convolutional neural network (convolutional neural network, CNN). However, weight parameters of the first neural network module and the second neural network module are different. It should be understood that the examples herein are merely for ease of understanding of this solution, and are not used to limit this solution.

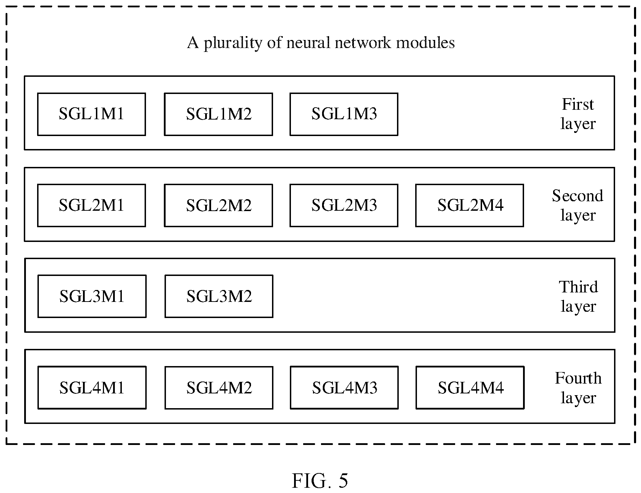

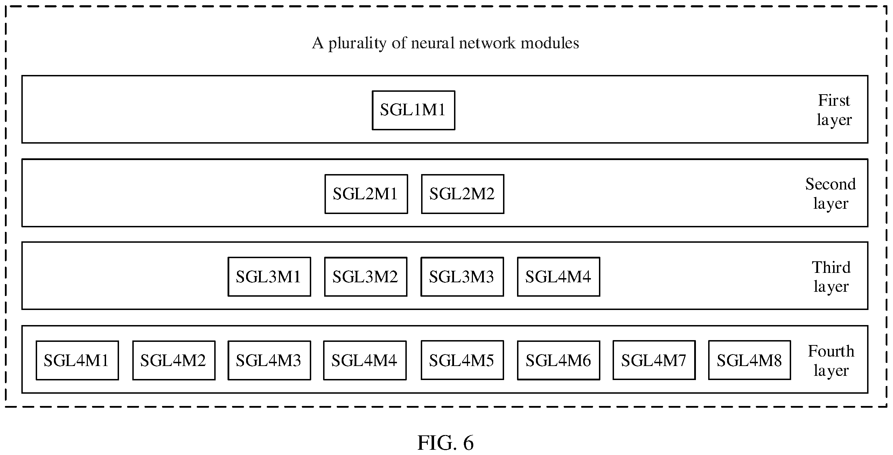

For more intuitive understanding of this solution, refer to FIG. 5 and FIG. 6. FIG. 5 and FIG. 6 are two schematic diagrams of the plurality of neural network modules in the machine learning model training method provided in this embodiment of this application. In FIG. 5 and FIG. 6, an example in which different groups include different quantities of neural network modules, and a layered structure including the plurality of neural network modules has four layers in total (in other words, the plurality of neural network modules are correspondingly divided into four groups): SGL1, SGL2, SGL3, and SGL4 is used. A first layer (namely, a first group of neural network modules) includes three neural network modules. A first neural network module SGL1M1 uses a three-layer MLP, a second neural network module SGL1M2 uses a two-layer MLP, and a third neural network module SGL1M3 is a two-layer CNN. A second layer (namely, a second group of neural network modules) includes four neural network modules. A first neural network module SGL2M1 uses a three-layer MLP, a second neural network module SGL2M2 uses a two-layer MLP, a third neural network module SGL2M3 is a three-layer CNN, and a fourth neural network module SGL2M4 is a two-layer CNN. A third layer (namely, a third group of neural network modules) includes two neural network modules. A first neural network module SGL3M1 uses a two-layer MLP, and a second neural network module SGL3M2 uses a two-layer CNN. A fourth layer (namely, a fourth group of neural network modules) includes four neural network modules. A first neural network module SGL4M1 uses a three-layer MLP, a second neural network module SGL4M2 uses a two-layer MLP, a third neural network module SGL4M3 is one-layer CNN + two-layer MLP, and a fourth neural network module SGL4M4 is one-layer CNN + one-layer MLP.

Continue to refer to FIG. 6. A main model of a layered structure of a plurality of groups of neural network modules is of a binary tree-shaped structure. A neural network module included at a first layer (namely, a first group of neural network modules) is an SGL1M1. Neural network modules included at a second layer (namely, a second group of neural network modules) are sequentially an SGL2M1 and an SGL2M2 from left to right. Neural network modules included at a third layer (namely, a third group of neural network modules) are sequentially an SGL3M1, an SGL3M2, an SGL3M3, and an SGL3M4 from left to right. Neural network modules included at a fourth layer (namely, a fourth group of neural network modules) are sequentially an SGL4M1, an SGL4M2, an SGL4M3, an SGL4M4, an SGL4M5, an SGL4M6, an SGL4M7, and an SGL4M8 from left to right. When a plurality of second neural networks are constructed by using the plurality of neural network modules shown in FIG. 6, neural network modules may be selected from the plurality of neural network modules of the tree-shaped structure. For example, the second neural network may be SGL1M1 + SGL2M1 + SGL3M1 + SGL4M1. For another example, the second neural network may be SGL1M1 + SGL2M2 + SGL3M3 + SGL4M5. Details are not described herein. It should be understood that the examples in FIG. 5 and FIG. 6 are merely for ease of understanding of this solution, and are not used to limit this solution.

For a process of constructing the at least two second neural networks based on the plurality of neural network modules, after receiving the plurality of neural network modules sent by the server, the first client may select only one neural network module from each group to construct the second neural network. In other words, the second neural network is a single-branch neural network. The first client may alternatively select at least two neural network modules from each group to construct the second neural network, that is, one second neural network includes a plurality of branches. The first client may alternatively select no neural network module from a group of neural network modules.

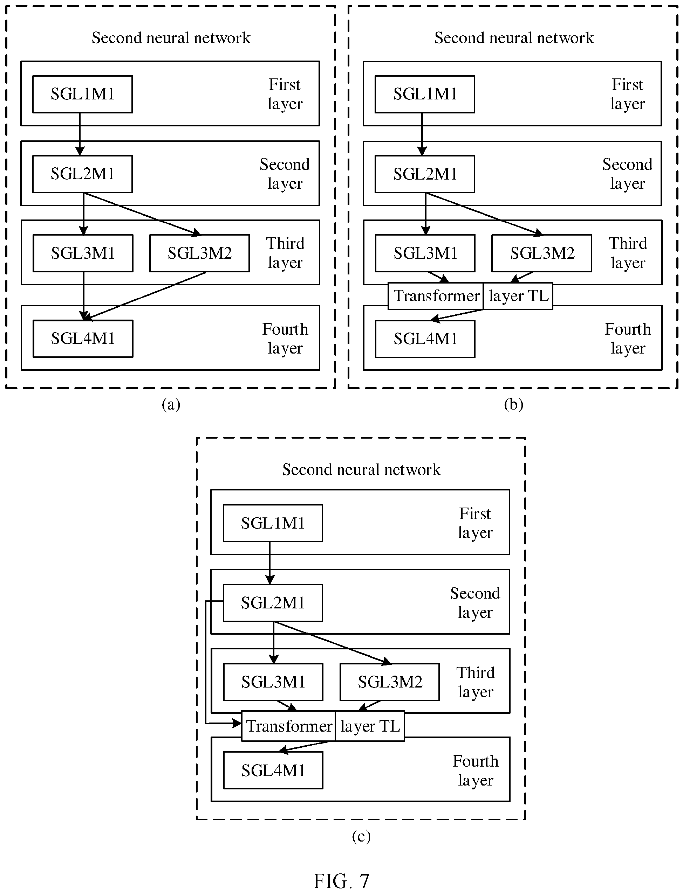

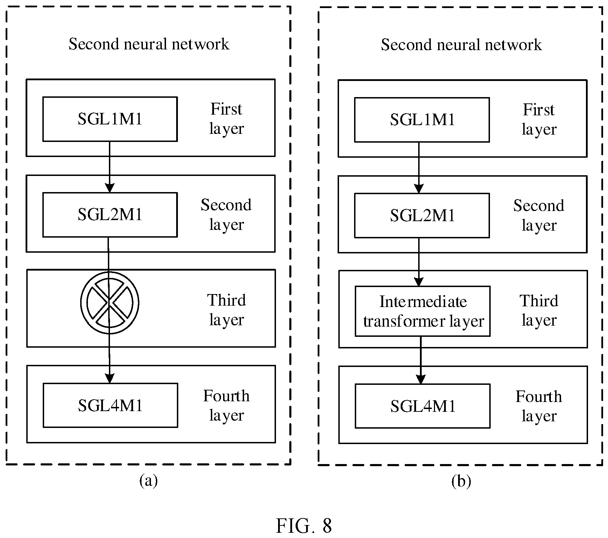

For more intuitive understanding of this solution, an example is provided with reference to FIG. 5. FIG. 7 and FIG. 8 are schematic diagrams of four structures of the second neural network in the machine learning model training method provided in this embodiment of this application. In both FIG. 7 and FIG. 8, the second neural network is constructed based on the plurality of groups of neural network modules shown in FIG. 5. First refer to FIG. 7. In FIG. 7, a neural network module selected at the first layer is the SGL1M1, a neural network module selected at the second layer is the SGL2M1, neural network modules selected at the third layer are the SGL3M1 and the SGL3M2, and a neural network module selected at the fourth layer is the SGL4M1. In an implementation, as shown in a sub-schematic diagram (a) in FIG. 7, an output of the SGL2M1 is used as an input of each of the SGL3M1 and the SGL3M2, and weighted average of outputs of the SGL3M1 and the SGL3M2 is used as an input of the SGL4M1. In another implementation, as shown in a sub-schematic diagram (b) in FIG. 7, a transformer layer TL is added between the second layer and the third layer of the second neural network. An output of the SGL2M1 is used as an input of each of the SGL3M1 and the SGL3M2, outputs of the SGL3M1 and the SGL3M2 are used as an input of the transformer layer TL, and an output of the transformer layer TL is used as an input of the SGL4M1. For more intuitive understanding of the second neural network shown in the sub-schematic diagram (b) in FIG. 7, the following discloses a calculation process of the second neural network:

$$h1 = SGL1M1(x);$$

$$h2 = SGL2M1(h1);$$

$$h3_1 = SGL3M1(h2);$$

$$h3_2 = SGL3M2(h2);$$

$$h_{TL} = TL(h3_1, h3_2);$$

and

$$y = SGL4M1(h_{TL}).$$

x represents input data, and h1 represents the output of SGL1M1. h1 is input into SGL2M1 to obtain the output h2 of SGL2M1. The output of SGL2M1 is separately input into SGL3M1 and SGL3M2 to separately obtain $h3_1$ and $h3_2$. $h3_1$ and $h3_2$ are input into the transformer layer TL to obtain the output $h_{TL}$ of the transformer layer TL. $h_{TL}$ is input into SGL4M1 to obtain a prediction result y that is of x and that is output by the entire second neural network.

In another implementation, an output of the SGL2M1 is used as an input of each of the SGL3M1 and the SGL3M2, outputs of the SGL3M1 and the SGL3M2 are used as an input of a transformer layer TL, and an output of the TL is used as an input of the SGL4M1. For more intuitive understanding of the second neural network shown in the sub-schematic diagram (c) in FIG. 7, the following discloses a calculation process of the second neural network:

$$h1 = SGL1M1(x);$$

$$h2 = SGL2M1(h1);$$

$$h3_1 = SGL3M1(h2);$$

$$h3_2 = SGL3M2(h2);$$

$$h_{TL} = h3_1 * TL(h2) + h3_2 * (1 - TL(h2));$$

and

$$y = SGL4M1(h_{TL}).$$

Meanings of x, h1, h2, $h3_1$, and $h3_2$ are similar to meanings in the foregoing implementation. Reference may be made for understanding. A difference lies in generation manners of $h_{TL}$. For a generation manner of $h_{TL}$ in this implementation, refer to the foregoing formula. y represents a prediction result that is of x and that is output by the second neural network in this implementation. It should be understood that the examples in FIG. 7 are merely for ease of understanding of this solution, and are not used to limit this solution.

Continue to refer to FIG. 8. In the second neural network shown in FIG. 8, a neural network module selected at the first layer is the SGL 1M1, a neural network module selected at the second layer is the SGL2M1, a third layer is vacant, and a neural network module selected at the fourth layer is the SGL4M1 . Refer to a sub-schematic diagram (a) in FIG. 8. Because an output dimension of the SGL2M1 is not equal to an input dimension of the SGL4M1, the SGL2M1 and the SGL4M1 cannot be directly connected. In this case, an intermediate transformer layer may be added between the second layer and the third layer, an output of the SGL2M1 is used as an input of the intermediate transformer layer, and an output of the intermediate transformer layer is used as an input of the SGL4M1 . It should be understood that the example in FIG. 8 is merely for ease of understanding of this solution, and is not used to limit this solution.

402: The first client selects at least one first neural network from the at least two second neural networks.

In some embodiments of this application, after the first client obtains the plurality of neural network modules, in a case, if the first client selects the first neural network for the first time, the first client may randomly select at least two first neural networks from the at least two second neural networks. A quantity of randomly selected first neural networks may be preset, for example, four, five, or six. This is not limited herein.

Optionally, when a quantity of adaptation values in a first adaptation relationship does not exceed a first threshold, the first client may also randomly select the at least two first neural networks from the at least two second neural networks. For example, a value of the first threshold may be 10%, 12%, 15%, or the like. This is not limited herein.

In another case, when the first client does not select the first neural network for the first time, the first client may select, from the at least two second neural networks based on the first adaptation relationship, at least one first neural network with a high adaptation value with a first data set. In this embodiment of this application, the first adaptation relationship is pre-configured on the first client, so that the at least one first neural network with a high adaptation value with the first data set is selected from the at least two second neural networks based on the first adaptation relationship, to ensure that the selected neural network is a neural network adapted to a data feature of the first data set, thereby implementing personalized customization of neural networks of different clients. In addition, selecting the neural network adapted to the data feature of the first data set helps improve accuracy of a trained neural network.

The at least one first neural network with a high adaptation value may be N first neural networks with a highest adaptation value. A value of N is an integer greater than or equal to 1. For example, the value of N may be 1, 2, 3, 4, 5, 6, or another value. This is not limited herein. Alternatively, the at least one first neural network with a high adaptation value may be at least one first neural network with an adaptation value greater than a fourth threshold, and a value of the fourth threshold may be flexibly determined based on factors such as a generation manner and a value range of the adaptation value. This is not limited herein.

Specifically, the first client may obtain a first adaptation matrix based on the first adaptation relationship, where each element in the first adaptation matrix represents an adaptation value. When the first adaptation relationship has a null value, the first adaptation relationship may be supplemented in a matrix decomposition manner, and a supplemented first adaptation relationship no longer includes the null value. In this way, the at least one first neural network with a high adaptation value with the first data set may be selected based on the supplemented first adaptation relationship.

Optionally, when the first client does not select the first neural network for the first time, and the quantity of adaptation values in the first adaptation relationship is greater than the first threshold, the first client selects the at least one first neural network from the at least two second neural networks based on the first adaptation relationship, where the at least one first neural network includes a neural network with a high adaptation value with the first data set.

Optionally, at least one first neural network selected by the first client may not only include the at least one first neural network with a high adaptation value, but also include the at least one randomly selected first neural network.

403: The first client calculates an adaptation value between the first data set and a first neural network.

In some embodiments of this application, the first client may store the first adaptation relationship in a form of a table, a matrix, an index, an array, or the like. The first adaptation relationship includes a plurality of adaptation values, and the adaptation value indicates an adaptation degree between the first data set and a second neural network. The first adaptation relationship may further include identification information of each second neural network, and is used to uniquely identify each first network. For more intuitive understanding of this solution, the following uses a table as an example to describe the first adaptation relationship.

**Table 1**

|  | Neural network ID1 | Neural network ID2 | Neural network ID3 | Neural network ID4 | ... | Neural network ID95 | Neural network ID96 |
|---|---|---|---|---|---|---|---|
| Adaptation value |  |  |  |  |  |  |  |

ID is the abbreviation of an identity (Identity). In Table 1, an example in which a plurality of neural network modules are divided into four groups, a first group of neural network modules includes four neural network modules, a second group of neural network modules includes three neural network modules, a third group of neural network modules includes two neural network modules, a fourth group of neural network modules includes four neural network modules, and the first client selects only one neural network module from each group to construct a second neural network is used. In this case, 96 second neural networks may be constructed in total. Correspondingly, the first adaptation relationship includes 96 pieces of identification information that one-to-one correspond to the 96 second neural networks. It should be noted that the first adaptation relationship does not necessarily include an adaptation value between the first data set and each second neural network. The first client may obtain the adaptation value between the first data set and each second neural network through calculation based on an existing adaptation value by using a method such as matrix decomposition. A specific calculation process is described in subsequent steps.

The first client stores the first data set, and the first data set includes a plurality of pieces of first training data and a correct result of each piece of first training data. After obtaining the at least one first neural network, the first client needs to calculate the adaptation value between the first data set and the first neural network, and write the adaptation value obtained through calculation in step 403 into the first adaptation relationship, in other words, update the first adaptation relationship based on the adaptation value obtained through calculation in step 403. For a generation manner of the adaptation value, reference may alternatively be made to descriptions in subsequent steps, and details are not described herein.

An adaptation value between the first data set and one first neural network may be obtained through calculation in the following two manners:

(1) The adaptation value is obtained by calculating a function value of a loss function.

In this embodiment, the adaptation value between the first data set and the first neural network corresponds to a function value of a first loss function. The first loss function indicates a similarity between a prediction result of first data and a correct result of the first data. The prediction result of the first data is obtained based on the first neural network, and the first data and the correct result of the first data are obtained based on the first data set. A larger function value of the first loss function indicates a smaller adaptation value between the first data set and the first neural network, and a smaller function value of the first loss function indicates a larger adaptation value between the first data set and the first neural network. In this embodiment of this application, the adaptation value between the first data set and the first neural network is calculated based on the loss function. This solution is simple, easy to implement, and has high accuracy.

Specifically, in an implementation, the first client clusters the first data set to obtain at least one data subset, where a first data subset is a subset of the first data set, and the first data subset is any one of the at least one data subset. Then, the first client generates an adaptation value between the first data subset and the first neural network based on the first data subset and the first loss function. The first loss function indicates the similarity between the prediction result of the first data and the correct result of the first data. The prediction result of the first data is obtained based on the first neural network, and the first data and the correct result of the first data are obtained based on the first data subset. A smaller function value of the first loss function indicates a larger adaptation value between the first data subset and the first neural network. The first client performs the foregoing operation on each of at least two data subsets, to obtain an adaptation value between each data subset and the first neural network. The first client may average adaptation values between a plurality of data subsets and the first neural network to obtain the adaptation value between the entire first data set and the first neural network, and update the first adaptation relationship.

For a process of generating the adaptation value between the first data subset and the first neural network, more specifically, in one case, when the first data is any piece of data in the first data subset, because data in the first data subset is used to perform a training operation on the first neural network (in other words, the first data subset includes the first training data), may be further used to test a correctness rate of a trained first neural network (in other words, the first data subset may include test data), and may be further used to verify correctness of a hyperparameter in the first neural network (in other words, the first data subset may further include verification data), the first data may be data used for training, may be data used for testing, or may be data used for verification. The first client may input each piece of first data in the first data subset into the first neural network to obtain a prediction result that is of the first data and that is output by the first neural network, and calculate a function value of a first loss function based on the prediction result of the first data and a correct result of the first data. The first client performs the foregoing operation on all pieces of first data in the first data subset to obtain function values of a plurality of loss functions, and averages the function values of the plurality of loss functions to obtain the adaptation value between the entire first data subset and the first neural network. Further, the first client may determine a reciprocal of an average value of the function values of the plurality of loss functions as the adaptation value between the entire first data subset and the first neural network.

In another case, the first data is a clustering center of the first data subset. The first client may alternatively calculate a clustering center of all data in the first data subset based on the first data subset, and input the clustering center into the first neural network to obtain a prediction result that is of the first data and that is output by the first neural network. The first client averages correct results of all the data in the first data subset to obtain a correct result of one piece of first data, and then calculates a function value of a first loss function, to obtain the adaptation value between the entire first data subset and the first neural network. Further, the first client may take a reciprocal of the function value of the foregoing loss function, and determine the reciprocal as the adaptation value between the entire first data subset and the first neural network.

Optionally, with reference to the description in step 404, in a process of performing the training operation on the first neural network by using the first data set, the adaptation value between the first data subset and the first neural network may be determined as an adaptation value between each piece of training data in the first data subset and the first neural network. Adaptation values between training data in different data subsets and the first neural network are different. In this embodiment of this application, the first data set is clustered to obtain the at least two data subsets. Adaptation values between different training data in a same data subset and the first neural network are the same, in other words, a same type of training data has a same modification capability for the first neural network, to meet a case in which at least two data subsets with different data features exist in a same client, so as to further improve a personalized customization capability of a neural network, and help improve accuracy of the trained neural network.

In another implementation, when the first data is any piece of data in the first data set, because data in the first data set is used to perform a training operation on the first neural network (in other words, the first data set includes the first training data), may be further used to test a correctness rate of a trained first neural network (in other words, the first data set may include test data), and may be further used to verify correctness of a hyperparameter in the first neural network (in other words, the first data set may further include verification data), the first data may be data used for training, may be data used for testing, or may be data used for verification. The first client may successively input each piece of first data in the first data set into the first neural network to obtain a function value of a loss function corresponding to each piece of first data, average function values of a plurality of loss functions to obtain a function value of a loss function corresponding to the entire first data set, and generate the adaptation value between the entire first data set and the first neural network based on the function value of the loss function corresponding to the entire first data set.

Optionally, with reference to the description in step 404, in a process of performing the training operation on the first neural network by using the first data set, the adaptation value between the first data set and the first neural network is determined as an adaptation value between each piece of first data in the first data set and the first neural network. In other words, adaptation values between all the first training data in the first data set and the first neural network are the same.

In another implementation, the first client may successively input each piece of first data in the first data set into the first neural network to obtain a function value of a loss function corresponding to each piece of first data, generate an adaptation value between each piece of first data and the first neural network, and then calculate an average value of the adaptation values between all the first data and the first neural network, to obtain the adaptation value between the entire first data set and the first neural network. Optionally, with reference to the description in step 404, in the process of performing the training operation on the first neural network by using the first data set, each piece of first data has an adaptation value between the first data and the first neural network.

(2) The adaptation value is obtained by calculating a similarity between the first neural network and a third neural network.

In this embodiment, the adaptation value between the first data set and the first neural network corresponds to a first similarity. A larger first similarity indicates a larger adaptation value between the first data set and the first neural network, and a smaller first similarity indicates a smaller adaptation value between the first data set and the first neural network. The first similarity is a similarity between the first neural network and the third neural network. The third neural network is a neural network with highest accuracy of outputting a prediction result in a previous round of iteration. Alternatively, if this round of iteration is not a first round of iteration process, the third neural network may be a neural network having a same network structure as the first neural network, in other words, the first neural network and the third neural network correspond to same identification information. A difference between the third neural network and the first neural network lies in that the third neural network is a trained neural network obtained by performing a training operation on the third neural network by the first client by using the first data set last time.

In this embodiment of this application, because the third neural network is a neural network with highest accuracy of outputting the prediction result in the previous round of iteration, and the third neural network is a neural network that has been trained by using the first data set, in other words, an adaptation degree between the third neural network and the first data set is high, if the similarity between the first neural network and the third neural network is high, it indicates that an adaptation degree between the first neural network and the first data set is high, and an adaptation value is large. Another implementation solution for calculating the adaptation value is provided, and implementation flexibility of this solution is improved.

Specifically, the similarity between the first neural network and the third neural network is determined in any one of the following manners:

In an implementation, the first client separately inputs same data to the first neural network and the third neural network, and compares a similarity between output data of the first neural network and output data of the third neural network. The similarity may be obtained by calculating a Euclidean distance, a Mahalanobis distance, a cosine distance, or a cross entropy between the first neural network and the third neural network, or in another manner.

Further, a similarity between output data of the first neural network and the output data of the third neural network may be a first similarity between output data of the entire first neural network and output data of the entire third neural network. In this case, the first similarity may be directly determined as the similarity between the first neural network and the third neural network. Alternatively, the similarity between the first neural network and the third neural network is obtained after the first similarity is converted.

The similarity between the output data of the first neural network and the output data of the third neural network may alternatively be a similarity between output data of each module in the first neural network and output data of each module in the third neural network. A product of similarities between output data of all the modules is calculated to obtain the similarity between the output data of the entire first neural network and the output data of the entire third neural network, and then the similarity between the first neural network and the third neural network may be obtained.

In another implementation, if neural network modules that construct the first neural network and the third neural network are same neural networks, the first client may further calculate a second similarity between a weight parameter matrix of the first neural network and a weight parameter matrix of the third neural network, to determine the second similarity as the similarity between the first neural network and the third neural network, or obtain the similarity between the first neural network and the third neural network after converting the second similarity. The second similarity may be obtained by calculating a Euclidean distance, a Mahalanobis distance, a cosine distance, or a cross entropy between the first neural network and the third neural network, or in another manner.

In this embodiment of this application, two manners of calculating the similarity between the first neural network and the third neural network are provided, thereby improving implementation flexibility of this solution.

It should be noted that, if the third neural network and the first neural network correspond to the same identification information, disconfidence may be further increased for the third neural network. A longer interval between the third neural network and the first neural network indicates higher disconfidence. The disconfidence and the calculated adaptation value may be used together to determine a final adaptation value, and the final adaptation value may be obtained through adding or multiplying.

404: The first client performs the training operation on the first neural network by using the first data set, to obtain the trained first neural network.

In this embodiment of this application, after obtaining the at least one first neural network, the first client performs the training operation on the first neural network by using the first data set, to obtain the trained first neural network. Specifically, the first data set includes the plurality of pieces of first training data and the correct result of each piece of first training data. The first client inputs one piece of first training data into the first neural network, to obtain a prediction result that is of the first training data and that is output by the first neural network. Further, a function value of a fourth loss function is generated based on the prediction result of the first training data and a correct result of the first training data, and gradient derivation is performed based on the function value of the fourth loss function, to reversely update a weight parameter of the first neural network, so as to complete one training operation on the first neural network. The first client performs iterative training on the first neural network until a preset condition is met, to obtain the trained first neural network.

The fourth loss function indicates the prediction result of the first training data and the correct result of the first training data. A type of the fourth loss function is related to a task type of the first neural network. For example, if a task of the first neural network is classification, the fourth loss function may be a cross-entropy loss function, a 0-1 loss function, another loss function, or the like. This is not limited herein. An objective of performing iterative training on the first neural network by the first client is to shorten the similarity between the prediction result of the first training data and the correct result of the first training data. The preset condition may be that a convergence condition of the fourth loss function is met, or may be that a quantity of iteration times reaches a preset quantity of times.

For more intuitive understanding of this solution, an example of the fourth loss function is disclosed below:

$$\text{Loss M}_1 = \frac{\sum_{j=1}^{J_i}\left(M_k(x_{ij}) - y_{ij}\right)^2}{J_i} \quad (1)$$

$\text{Loss M}_1$ represents the fourth loss function, $d_{ij} = \{x_{ij}, y_{ij}\}$ represents the first data set in the first client, a value of j is 1 to $J_i$, and $M_k$ represents one second loss function. It should be understood that the example in Formula (1) is merely used to facilitate understanding of this solution, and is not used to limit this solution.

Further, after obtaining the at least one first neural network, and before performing the training operation on the first neural network by using the first data set, the first client further needs to initialize a parameter of the first neural network. In a manner, the first client may directly use the parameter of the first neural network sent by the server to the first client. In another manner, a current weight parameter of the first neural network may be initialized by using a weight parameter obtained when the first client trains the first neural network last time. In another implementation, weighted averaging may be performed based on the parameter of the first neural network sent by the server to the first client and the weight parameter obtained when the first client trains the first neural network last time, to initialize the current weight parameter of the first neural network. In another implementation, a parameter of the second neural network may be randomly initialized. This is not limited herein.

Optionally, step 404 may include: The first client performs the training operation on the first neural network based on the second loss function by using the first data set. The second loss function includes a first item and a second item, the first item indicates a similarity between a first prediction result and the correct result of the first training data, the second item indicates a similarity between the first prediction result and a second prediction result, and the second item may be referred to as a penalty item or a constraint item. Further, the first prediction result is a prediction result that is of the first training data and that is output by the first neural network after the first training data is input into the first neural network, and the second prediction result is a prediction result that is of the first training data and that is output by a fourth neural network after the first training data is input into the fourth neural network. The fourth neural network is a first neural network on which no training operation is performed, in other words, an initial state of the fourth loss function is consistent with an initial state of the second loss function. However, in a process of training the second loss function, a weight parameter of the fourth loss function is not updated. In this embodiment of this application, because the first data set on the first client does not necessarily match the first neural network, in a process of training the first neural network by using the first data set, the second loss function further indicates the similarity between the first prediction result and the second prediction result, to avoid excessive changes to the first neural network in the training process.

In other words, the penalty item is added to the second loss function based on the fourth loss function, and a purpose of adding the penalty item is to shorten a similarity between the prediction result that is of the first training data and that is output by the first neural network and the prediction result that is of the first training data and that is output by the fourth neural network. For more intuitive understanding of this solution, an example of the second loss function is disclosed below:

$$\text{Loss M}_2 = \frac{\sum_{j=1}^{J_i}\left(M_k(x_{ij})-y_{ij}\right)^2}{J_i} + \gamma_1 \frac{\sum_{j=1}^{J_i}\left(M_k(x_{ij})-y_{ij}'\right)^2}{J_i} \quad (2)$$

$\text{Loss M}_2$ represents the second loss function, $\gamma_1$ is a hyperparameter, $y_{ij}'$ represents the prediction result that is of the first training data and that is output by the fourth loss function after the first training data is input into the fourth loss function, and for a meaning represented by $\frac{\sum_{j=1}^{J_i}\left(M_k(x_{ij})-y_{ij}\right)^2}{J_i}$ and meanings of other letters in Formula (2), refer to the foregoing descriptions of Formula (1), and details are not described herein again. It should be understood that the example in Formula (2) is merely for ease of understanding of this solution, and is not used to limit this solution.

Optionally, step 404 may further include: The first client performs the training operation on the first neural network based on a fifth loss function by using the first data set. The fifth loss function indicates the similarity between the first prediction result and the correct result of the first training data, and further indicates a similarity between the first neural network and the fourth neural network. To be specific, the penalty item is added to the second loss function based on the fourth loss function, and a purpose of adding the penalty item is to shorten the similarity between the first neural network and the fourth neural network. For more intuitive understanding of this solution, an example of the fifth loss function is disclosed below:

$$\text{Loss M}_3 = \frac{\sum_{j=1}^{J_i}\left(M_k(x_{ij})-y_{ij}\right)^2}{J_i} + \gamma_2 ||Mk - M0|| \quad (3)$$

$\text{Loss M}_3$ represents the fifth loss function, $\gamma_2$ is a hyperparameter, M0 represents the fourth loss function, and for a meaning represented by $\frac{\sum_{j=1}^{J_i}\left(M_k(x_{ij})-y_{ij}\right)^2}{J_i}$ and meanings of other letters in Formula (3), refer to the foregoing descriptions of Formula (1), and details are not described herein again. It should be understood that the example in Formula (3) is merely for ease of understanding of this solution, and is not used to limit this solution.

Optionally, a larger adaptation value between the first training data and the first neural network indicates a greater degree of modifying the weight parameter of the first neural network in a process of training the first neural network by using the first training data. Further, in one training process, a manner of adjusting the weight parameter of the first neural network includes: adjusting a learning rate, adjusting a coefficient of the penalty item, or another manner. In this embodiment of this application, because adaptation degrees between different training data in a same client and the first neural network are different, it is unreasonable that the weight parameter of the first neural network is modified by all the training data with a fixed capability. A larger adaptation value between one piece of first training data and the first neural network indicates that the first neural network should process the first training data more, and the weight parameter of the first neural network is modified to a greater degree in a process of training the first neural network by using the first training data. This helps improve training efficiency of the first neural network.

A higher learning rate indicates a greater degree of modifying the weight parameter of the first neural network in one training process, and a lower learning rate indicates a smaller degree of modifying the first neural network in one training process. In other words, a larger adaptation value between the first training data and the first neural network indicates a higher learning rate in the process of training the first neural network by using the first training data. For more intuitive understanding of this solution, an example is provided with reference to the foregoing Formula (1) to Formula (3):

$$M_{k+1} = M_k - \eta_i * \nabla LossM;$$

and

$$\eta_i = \eta * E.$$

$M_{k+1}$ represents a first neural network obtained after one training operation is performed on $M_k$, $\eta_i$ represents the learning rate, $\eta$ is a hyperparameter, E represents an adaptation value between the first training data and the first neural network that is being trained, and LossM represents any one of $LossM_1$, $LossM_2$, and $LossM_3$. It should be understood that the foregoing example is merely used for ease of understanding this solution, and is not used to limit this solution.

A smaller coefficient of the penalty item indicates a greater degree of modifying the first neural network in one training process, and a larger coefficient of the penalty item indicates a smaller degree of modifying the first neural network in one training process. In other words, a larger adaptation value between the first training data and the first neural network indicates a smaller coefficient of the penalty item in the process of training the first neural network by using the first training data. An example is provided with reference to the foregoing Formula (2) and Formula (3), both values of $\gamma_1$ and $\gamma_2$ may be 1/ E. In other words, both values of $\gamma_1$ and $\gamma_2$ may be reciprocals of adaptation values between the first training data and the first neural network that is being trained.

Further, in an implementation, adaptation values between different first training data in the first data set and the first neural network may be different. The at least two data subsets may be obtained after the first data set is clustered. Adaptation values between training data in a same data subset and the first neural network are the same, and adaptation values between training data in different data subsets and the first neural network are different. Alternatively, adaptation values between all first training data in the first data set and the first neural network may be different. In another implementation, the entire first data set may be considered as a whole, and adaptation values between all the first training data in the first data set and the first neural network are the same.

It should be noted that because the first client selects one or more first neural networks, the first client needs to calculate an adaptation value between the first training data and each of the one or more first neural networks, and perform a training operation on each of the one or more first neural networks. In this case, an execution object each time step 403 and step 404 are performed may be only one first neural network in the one or more first neural networks, and the first client needs to repeatedly perform step 403 and step 404 for a plurality of times. Alternatively, the first client may first calculate adaptation values between the first training data and all the first neural networks in the one or more first neural networks by using step 403, and then perform an iteration operation on each first neural network by using step 404.

In addition, in the entire training process described in step 404, if accuracy of all first neural networks in at least one trained first neural network does not reach a second threshold, the first client may directly generate a new neural network module, and construct a new first neural network based on the plurality of received neural network modules. Optionally, after training ends in step 404, accuracy of a first neural network including the newly added neural network module may be compared with accuracy of a first neural network not including the newly added neural network module. If an accuracy gain does not exceed a third threshold, the newly added neural network module is not reserved.

405: The first client sends at least one updated neural network module included in the at least one trained first neural network to the server.

In this embodiment of this application, after obtaining the at least one trained first neural network, the first client sends the at least one updated neural network module included in the at least one trained first neural network to the server. Correspondingly, the server receives the at least one updated neural network module sent by the first client. Because the first client is any one of a plurality of clients, the server receives at least one updated neural network module sent by each of the plurality of clients.

Optionally, if the first client further sends the newly added neural network module to the server, the server may further receive the newly added neural network module.

406: The server updates weight parameters of the stored neural network modules.

In this embodiment of this application, after the server receives the at least one updated neural network module sent by each of the plurality of clients, the server needs to update the weight parameters of the stored neural networks based on a plurality of received updated neural network modules, to complete one of the plurality of rounds of iteration.

Specifically, in an implementation, because different clients may have same neural network modules, weighted averaging is performed on weight parameters of the same neural network modules sent by the different clients, and a weighted average value is used as a weight parameter of the neural network module in the server. For neural network modules that do not overlap in different clients, parameters of the neural network modules sent by the clients are directly used as weight parameters of the neural network modules in the server. The same neural network modules mean that the neural network modules have same specific neural networks and are located in a same group.

Optionally, if receiving the newly added neural network module, the server may place the newly added neural network module into a corresponding group. Further, optionally, to improve privacy of each client, if the plurality of clients all add the newly added neural network modules to a same group, all the newly added neural network modules in the same group may be weighted and averaged into one neural network module, and then the neural network module is put into the group.

In another implementation, if training data exists in the server, the weight parameters of the neural network modules stored in the server may be further updated based on the plurality of updated neural network modules sent by the plurality of clients by using a model distillation method. In other words, the training data stored in the server is used to retrain the plurality of neural network modules stored in the server. A purpose of training is to shorten a similarity between output data of the neural network modules stored in the server and output data of the updated neural network modules sent by the client.

One neural network is divided into at least two submodules, the plurality of neural network modules stored in the server are divided into at least two groups corresponding to the at least two submodules, and different neural network modules in a same group have a same function. Optionally, after updating the weight parameters of the stored neural network modules, the server further calculates a similarity between different neural network modules in at least two neural network modules included in a same group, and combines two neural network modules whose similarity is greater than a preset threshold. In this embodiment of this application, the two neural network modules whose similarity is greater than the preset threshold are combined, in other words, two redundant neural network modules are combined. This not only reduces difficulty in managing the plurality of neural network modules by the server, but also prevents a client from repeatedly training the two neural network modules whose similarity is greater than the preset threshold, to reduce a waste of computer resources of the client.

Specifically, for a similarity determining process, the different neural network modules in the same group include a second neural network module and a first neural network module, and a similarity between the second neural network module and the first neural network module is determined in any one of the following manners:

In an implementation, the server separately inputs same data to the second neural network module and the first neural network module, and compares a similarity between output data of the second neural network module and output data of the first neural network module. A manner of calculating the similarity includes but is not limited to: calculating a Euclidean distance, a Mahalanobis distance, a cosine distance, a cross entropy, or the like between the second neural network module and the first neural network module. Details are not described herein.

In another implementation, if the second neural network module and the first neural network module are specifically represented as a same neural network, and a difference lies only in weight parameters, a similarity between a weight parameter matrix of the second neural network module and a weight parameter matrix of the first neural network module may be calculated. A manner of calculating the similarity is similar to that in the foregoing implementation, and may be understood with reference to the foregoing implementation. An example is provided with reference to FIG. 5. For the first layer (namely, the first group), the server needs to calculate a similarity $D_{mn} =< SGL1Mm, SGL1Mn >$ between any two of the SGL1M1, the SGL1M2, and the SGL1M3. If $D_{mn}$ is greater than the preset threshold, one is randomly selected from SGLIMm and SGL1Mn. For example, if $D_{12}$ is greater than the preset threshold, SGL1M1 is randomly selected and the SGL1M2 is deleted. The neural network modules at the second layer (namely, the second group), the third layer (namely, the third group), and the fourth layer (namely, the fourth group) are processed by analogy.

For a process of combining two neural network modules, the server may randomly select one neural network module from two different neural network networks. If the second neural network module and the first neural network module are specifically a same neural network, and the difference lies only in the weight parameters, the weight parameters of the second neural network module and the first neural network module may be further averaged, to generate a weight parameter of a combined neural network module.

In this embodiment of this application, two specific implementations of calculating a similarity between two different neural network modules are provided, and a user can flexibly select a manner based on an actual situation, thereby improving implementation flexibility of this solution.

It should be noted that, after updating the weight parameters of the stored neural network modules, the server re-enters step 401, to re-execute steps 401 to 407, in other words, re-execute a next round of iteration.

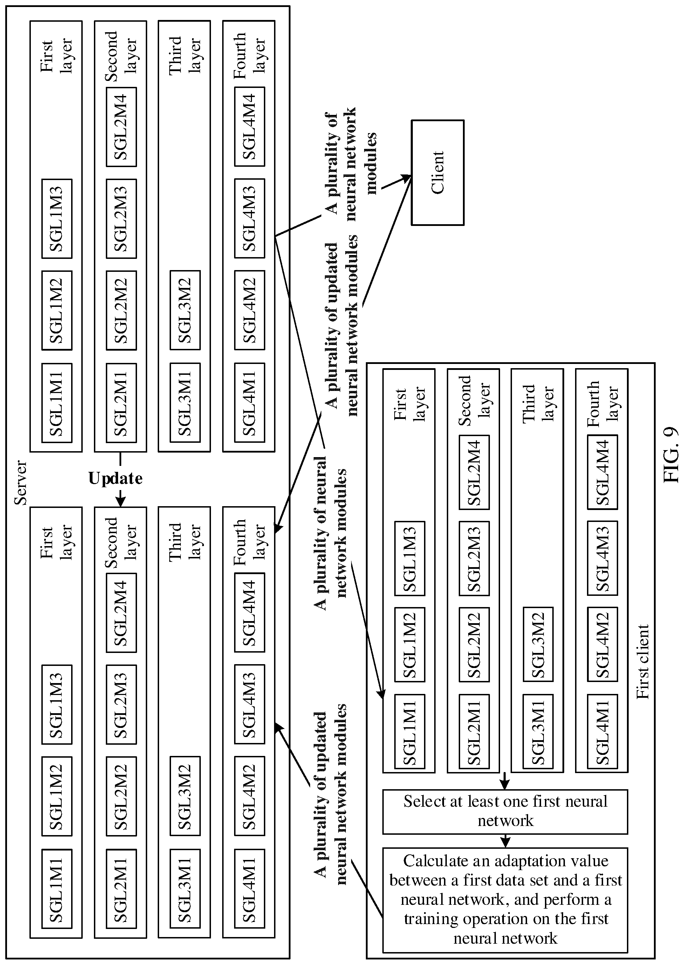

For more intuitive understanding of this solution, FIG. 9 is a schematic flowchart of a machine learning model training method according to an embodiment of this application. As shown in FIG. 9, a server stores a plurality of neural network modules, and the server separately sends the plurality of stored neural network modules to each client. After obtaining the plurality of neural network modules, the client first constructs a plurality of second neural networks for any one (for example, a first client) of a plurality of clients based on the plurality of neural network modules, selects, from the plurality of second neural networks, at least one second client adapted to a data feature of a first data set stored in the first client, calculates an adaptation value between the first data set and each first neural network, performs a training operation on each first neural network by using the first data set to obtain a plurality of updated neural network modules used to construct the first neural network, and then sends the plurality of updated neural network modules to the server. After receiving the updated neural network modules sent by each of the plurality of clients, the server updates weight parameters of the stored plurality of neural network modules based on the updated neural network modules sent by each of the clients, to complete one of a plurality of rounds of iteration. Although only two clients are shown in FIG. 9, in an actual case, the server may establish a communication connection to more clients. The example in FIG. 9 is merely for ease of understanding of this solution, and is not used to limit this solution.

(2) The client selects, by using a selector, a first neural network adapted to a data feature of a data set stored in the client.

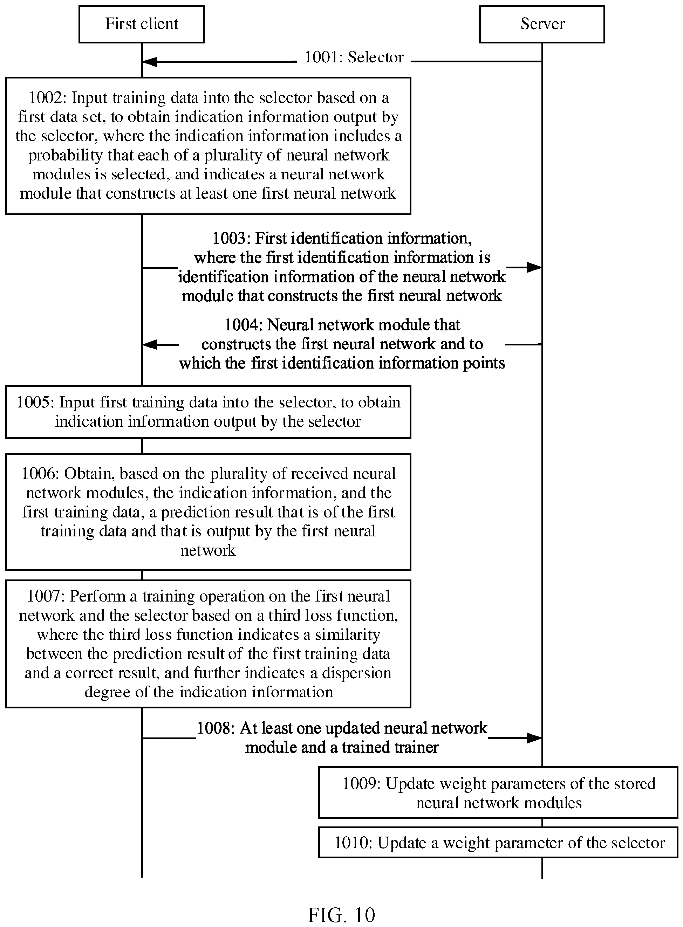

Specifically, refer to FIG. 10. FIG. 10 is a schematic flowchart of a machine learning model training method according to an embodiment of this application. The method may include the following steps.

1001: A first client receives a selector sent by a server.

In some embodiments of this application, the server sends the selector to the first client. Correspondingly, the first client receives the selector sent by the server, and the selector is a neural network configured to select, from a plurality of neural network modules, at least one neural network module that matches a data feature of a first data set. The server may further send, to the first client, identification information of each of the plurality of neural network modules stored in the server

1002: The first client inputs training data into the selector based on the first data set to obtain indication information output by the selector, where the indication information includes a probability that each of the plurality of neural network modules is selected, and indicates a neural network module that constructs at least one first neural network.

In some embodiments of this application, the first client inputs, based on the first data set, the training data into the selector, to obtain the indication information output by the selector. The indication information includes the probability that each of the plurality of neural network modules is selected. If the plurality of neural network modules include $Z$ neural network modules in total, the indication information may be specifically represented as a vector including $Z$ elements, and each element represents a probability that one neural network module is selected. An example is provided with reference to FIG. 5. FIG. 5 includes 18 neural network modules in total, and a value of $Z$ is 18. It should be understood that the example herein is merely used to facilitate understanding of this solution, and is not used to limit this solution.

For a process of inputting the training data into the selector, in an implementation, the first client may input each piece of first training data (an example of the training data) in the first data set into the selector once, to obtain indication information corresponding to each piece of first training data. In another implementation, the first client may alternatively perform a clustering operation on the first data set, and separately input several clustered clustering centers (an example of the training data) into the selector, to obtain indication information corresponding to each clustering center. In another implementation, the first client may alternatively perform a clustering operation on the first data set, separately sample several pieces of first training data from several clustered data subsets, and separately input sampled first training data (an example of the training data) into the selector, to obtain indication information corresponding to each piece of sampled first training data. The first client may alternatively generate the indication information in another manner. Details are not described herein.

For a process of determining, based on the indication information, the neural network module that constructs the at least one first neural network, in an implementation, the first client may initialize an array indicating a quantity of times that each neural network module is selected, and an initialized value is 0. The array may alternatively be in another form such as a table or a matrix Details are not described herein. After obtaining at least one piece of indication information, for each piece of indication information, for a neural network module whose selection probability is greater than a fifth threshold, the first client increases a quantity of times corresponding to the neural network module in the array by one. After traversing all the indication information, the first client collects, based on the array, statistics about at least one neural network module whose quantity of times of being selected is greater than a sixth threshold, and determines the at least one neural network module as the neural network module configured to construct the at least one first neural network. Values of the fifth threshold and the sixth threshold may be set based on an actual situation. This is not limited herein.

In another implementation, after obtaining a plurality of pieces of indication information, the first client may further calculate an average value of the plurality of pieces of indication information to obtain a vector including $Z$ elements, where each element in the vector indicates a probability that one neural network module is selected, obtain, from the Z elements, H elements with a maximum average value, and determine H neural network modules to which the H elements point as neural network modules used to construct the at least one first neural network, where Z is an integer greater than 1, and H is an integer greater than or equal to 1. Values of Z and H may be flexibly set based on an actual situation. This is not limited herein.

1003: The first client sends first identification information to the server, where the first identification information is identification information of the neural network module that constructs the first neural network.

In some embodiments of this application, the first client may further store the identification information of each neural network module. After determining a plurality of neural network modules used to construct the first neural network, the first client further obtains identification information of the plurality of neural network modules, to form the first identification information. The first identification information includes identification information of all the neural network modules used to construct the first neural network.

1004: The server sends, to the first client, the neural network module that constructs the first neural network and to which the first identification information points.

In some embodiments of this application, after receiving the first identification information, the server obtains, from all the stored neural network modules (that is, L neural network modules), all the neural network modules to which the first identification information points, and sends, to the first client, the neural network module that constructs the first neural network and to which the first identification information points.

1005: The first client inputs first training data into the selector, to obtain indication information output by the selector.

In some embodiments of this application, the first client inputs one piece of first training data into the trainer, to obtain one piece of indication information output by the selector. The piece of indication information may be specifically represented as the vector including Z elements, indicating the probability that each of the Z neural network modules is selected, and indicates the neural network module that constructs the first neural network. An example is provided with reference to FIG. 5. The indication information may be [$M_{SGL1M1}$, $M_{SGL1M2}$, $M_{SGL1M3}$, $M_{SGL2M1}$, ..., $M_{SGL4M3}$, $M_{SGL4M4}$], where $M_{SGL1M1}$ represents a probability that the first neural network module in the first group is selected, and the remaining elements are deduced by analogy. Details are not described herein again.

In this embodiment of this application, the training data is input into the selector based on the first data set, to obtain the indication information output by the selector, and the neural network module configured to construct the first neural network is selected based on the indication information. The selector is a neural network configured to select, from the plurality of neural network modules, a neural network module that matches the data feature of the first data set. This provides still another implementation of selecting the neural network module that constructs the first neural network, thereby improving implementation flexibility of this solution. In addition, selection performed by using the neural network helps improve accuracy of a selection process of the neural network module.

1006: The first client obtains, based on the plurality of received neural network modules, the indication information, and the first training data, a prediction result that is of the first training data and that is output by the first neural network.

In some embodiments of this application, after obtaining the piece of indication information in step 1005, the first client may obtain, based on the plurality of received neural network modules, the indication information, and the first training data, the prediction result that is of the first training data and that is output by the first neural network. For more intuitive understanding of this solution, an example is provided with reference to FIG. 5. An example of a formula for calculating the prediction result of the first training data is disclosed below:

$$h1 = \sum_{q=1}^{3} M_{SGL1Mq} * SGL1Mq(x);$$

$$h2 = \sum_{q=1}^{4} M_{SGL2Mq} * SGL2Mq(h1);$$

$$h3 = \sum_{q=1}^{2} M_{SGL3Mq} * SGL3Mq(h2);$$

and

$$y = \sum_{q=1}^{4} M_{SGL4Mq} * SGL4Mq(h3).$$

$M_{SGL1Mq}$, $M_{SGL2Mq}$, $M_{SGL3Mq}$, and $M_{SGL4Mq}$ are all indication information output by the selector, SGLIMq represent a neural network module in the first group of neural network modules, and SGL1Mq(x) represent an output of the neural network module after the first training data is input into the neural network module in the first group of neural network modules. If the first client does not obtain a neural network module from the server, it is considered that an output of the neural network module is 0. h1 represents output data of the entire first group. Other formulas in the foregoing formulas may be understood by analogy. y represent an output of the entire first neural network, that is, the prediction result of the first training data. It should be understood that the examples herein are merely for ease of understanding of this solution, and are not used to limit this solution.

1007: The first client performs a training operation on the first neural network and the selector based on a third loss function, where the third loss function indicates a similarity between the prediction result of the first training data and a correct result, and further indicates a dispersion degree of the indication information.

In some embodiments of this application, after generating the prediction result of the first training data, the first client generates a function value of the third loss function based on the prediction result of the first training data, the correct result of the first training data, and the indication information generated by the selector, and performs gradient derivation based on the function value of the third loss function, to reversely update weight parameters of the first neural networks (that is, update the plurality of received neural network modules) and a weight parameter of the selector, to complete one training of the plurality of received neural network modules and the selector. A purpose of training is to shorten the similarity between the prediction result of the first training data and the correct result, and increase the dispersion degree of the indication information output by the selector.

The third loss function includes a third item and a fourth item, the third item indicates the similarity between the prediction result of the first training data and the correct result, and the fourth item indicates the dispersion degree of the indication information. The third item may be obtained based on a cross-entropy distance, a first-order distance, a second-order distance, or the like between the prediction result of the first training data and the correct result. The fourth item may be performing regularization processing on the indication information, for example, performing L 1 regularization or LP regularization on the indication information. This is not limited herein. For more intuitive understanding of this solution, an example of the third loss function is disclosed below:

$$\mathrm{LossM_4} = \frac{\sum_{j=1}^{J_i}\left(M_k(x_{ij})-y_{ij}\right)^2}{J_i} + \gamma_3|\mathrm{MS(x)}| \quad (4)$$

$\mathrm{LossM_4}$ represents the third loss function, and for a meaning of $\frac{\sum_{j=1}^{J_i}\left(M_k(x_{ij})-y_{ij}\right)^2}{J_i}$, refer to the description of Formula (1) in the embodiment corresponding to FIG. 4. Details are not described herein again. MS(x) represents the indication information output by the selector, and $\gamma_3$ is a hyperparameter. It should be understood that the example in Formula (4) is merely for ease of understanding this solution, and is not used to limit this solution.

The first client repeatedly performs steps 1005 to 1007 until a preset condition is met, to obtain a plurality of updated neural network modules to which the first identification information points and a trained trainer. The preset condition may be that a quantity of iteration times of iterative training reaches a preset quantity of times, or may be that the third loss function meets a convergence condition.

1008: The first client sends at least one updated neural network module and the trained trainer to the server

1009: The server updates the weight parameters of the stored neural network modules.

In this embodiment of this application, when receiving the plurality of updated neural network modules sent by a plurality of clients (including the first client), the server needs to update weight parameters of the stored Z neural network modules. For a specific implementation, refer to the description in step 406 in the embodiment corresponding to FIG. 3. Details are not described herein again.

1010: The server updates the weight parameter of the selector

In some embodiments of this application, the server may receive trained trainers sent by the plurality of clients, and average weight parameters at corresponding locations in the plurality of trained trainers, to update the weight parameter of the selector stored in the server, so as to complete one round of iteration in a plurality of rounds of iteration. It should be noted that, after step 1010 is performed, step 1001 may be re-entered to enter a next round of iteration.

In this embodiment of this application, when the neural network module that constructs the first neural network is trained, the selector is trained, thereby saving computer resources. The selector is trained by processing data that needs to be processed, thereby helping improve accuracy of the indication information output by the selector

In this embodiment of this application, in the foregoing manner, different neural networks can be allocated to training data with different data features, in other words, personalized matching between the neural networks and the data features is implemented. In addition, because the first client is any one of the plurality of clients, a neural network is allocated and trained for each of the plurality of clients based on a data feature of a training data set stored in the client, so that a same neural network can be trained by using training data with a same data feature, and different neural networks can be trained by using training data with different data features. Therefore, not only personalized matching between the neural networks and the data features is implemented, but also accuracy of a trained neural network is improved.

(3) The server selects, based on a second adaptation relationship, a first neural network adapted to a data feature of a data set stored in the first client.

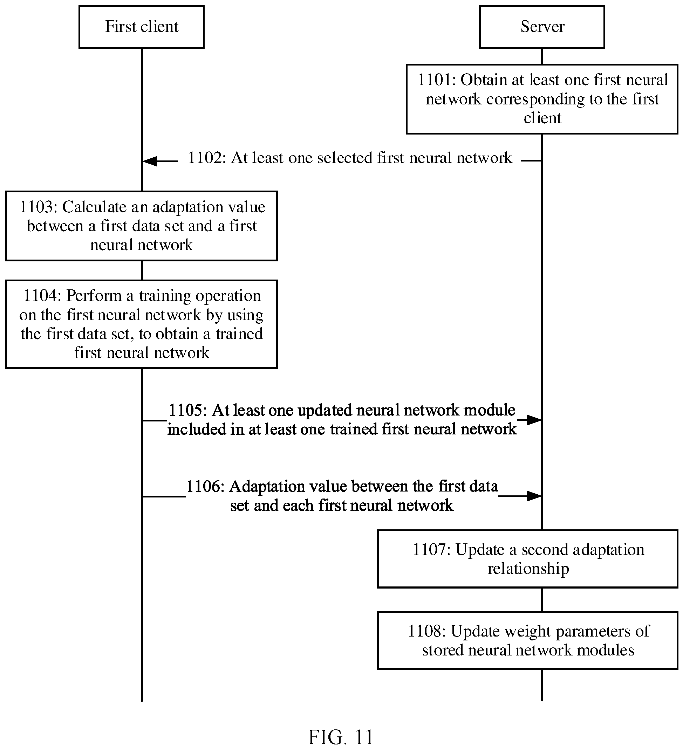

Specifically, refer to FIG. 11. FIG. 11 is a schematic flowchart of a machine learning model training method according to an embodiment of this application. The method may include the following steps.

1101: A server obtains at least one first neural network corresponding to a first client.

In some embodiments of this application, a plurality of neural network modules may be configured in the server, and the server constructs a plurality of second neural networks based on the plurality of stored neural network modules. For descriptions of the plurality of neural network modules and the plurality of second neural networks, refer to descriptions in step 401 in the embodiment corresponding to FIG. 4. Details are not described herein again.

When selecting to allocate the at least one first neural network to the first client, the server needs to obtain the at least one first neural network corresponding to the first client. Specifically, similar to the description in step 402 in the embodiment corresponding to FIG. 4, the server may randomly select at least one first neural network module from the plurality of second neural networks, or may select, from the at least two second neural networks based on a second adaptation relationship, at least one first neural network with a high adaptation value with a first data set. For application cases of the foregoing two manners, refer to the description in step 402 in the embodiment corresponding to FIG. 4. Details are not described herein again.

A difference from step 402 in the embodiment corresponding to FIG. 4 lies in that the server stores the second adaptation relationship. The second adaptation relationship includes a plurality of adaptation values, and the adaptation values indicate adaptation degrees between training data stored in a plurality of clients and the second neural network. An example is provided with reference to FIG. 5.

**Table 2**

|  | Neural network ID1 | Neural network ID2 | ... | Neural network ID96 |
|---|---|---|---|---|
| Client ID 1 | E1_1 | E1_2 |  | E1_96 |
| Client ID2 | E2_1 | Null |  | Null |
| ... |  |  |  |  |
| Client ID100 | Null | E100_2 |  | E100_96 |

In Table 2, an example in which 96 second neural networks may be constructed in total and there are 100 clients in total is used. E1_1, E1_2, and the like represent adaptation values. As shown in Table 2, the second adaptation relationship may include a null value. It should be understood that the example in Table 2 is merely for ease of understanding this solution, and is not used to limit this solution.

When the server does not perform an allocation operation of the first neural network for the first time, or when a proportion of a quantity of adaptation values included in the second adaptation relationship is greater than a first threshold, the server selects, from the at least two second neural networks based on the second adaptation relationship, the at least one first neural network with a high adaptation value with the first data set (that is, the first client).

Specifically, the server may obtain a second adaptation matrix corresponding to the second adaptation relationship, and perform matrix decomposition on the second adaptation matrix to obtain a decomposed similarity matrix of a neural network and a similarity matrix of a user. A product of the similarity matrix of the neural network and the similarity matrix of the user needs to be similar to a value of a corresponding location in the second adaptation relationship. Further, the similarity matrix of the neural network is multiplied by the similarity matrix of the user, to obtain a second supplemented matrix, and the at least one first neural network with a high adaptation value with the first data set (that is, the first client) is selected based on the second supplemented matrix.

Optionally, at least one first neural network selected by the first client may not only include the at least one first neural network with a high adaptation value, but also include the at least one randomly selected first neural network.

1102: The server sends the selected at least one first neural network to the first client.

1103: The first client calculates an adaptation value between the first data set and a first neural network.

1104: The first client performs a training operation on the first neural network by using the first data set, to obtain a trained first neural network.

1105: The first client sends at least one updated neural network module included in at least one trained first neural network to the server.

In this embodiment of this application, for specific implementations of steps 1103 to 1105, refer to the descriptions of steps 403 to 405 in the embodiment corresponding to FIG. 4. Details are not described herein again.

1106: The first client sends an adaptation value between the first data set and each first neural network to the server

In some embodiments of this application, the first client further sends, to the server, the adaptation value that is between each first neural network and the first data set (that is, the first client) and that is obtained through calculation in step 1103. The adaptation value includes identification information of neural networks and identification information of the first client that are used to notify the server of adaptation values between the first client and the neural networks. It should be understood that step 1106 may be performed together with step 1105, or may be performed before or after any one of step 1104 and step 1105. An execution sequence of step 1106 is not limited herein.

1107: The server updates the second adaptation relationship.

In some embodiments of this application, because the first client is any one of the plurality of clients, the server may obtain an adaptation value sent by each client. In other words, the server obtains a plurality of groups of adaptation relationships, and each group of adaptation relationships includes an adaptation value between a client identifier and a neural network identifier. In this case, the server may update the second adaptation relationship based on a plurality of received adaptation values. The server may alternatively delete an adaptation value that is not updated for a long time from the second adaptation relationship. Not updated for a long time means that more than 20 rounds of updates have not been updated.

1108: The server updates weight parameters of the stored neural network modules.

In this embodiment of this application, for a specific implementation of step 1108, refer to the description of step 405 in the embodiment corresponding to FIG. 4. Details are not described herein again. Optionally, the server may further delete a neural network module having a very small adaptation degree to all the clients, or may further delete a neural network that is not selected for a long time.

After step 1108 is performed, the second adaptation relationship may be further updated, to delete information corresponding to the deleted neural network module from the second adaptation relationship. It should be noted that step 1107 may be performed before step 1108, or step 1108 may be performed before step 1107. This is not limited herein.

In this embodiment of this application, the second adaptation relationship is configured on a server side, the client generates an adaptation value and sends the adaptation value to the client. The server selects, based on the second adaptation relationship, a first neural network adapted to the first client, thereby avoiding occupation of computer resources of the client and avoiding leakage of data of the client.

(4) The server selects, by using a selector, a first neural network adapted to a data feature of a data set stored in the first client.

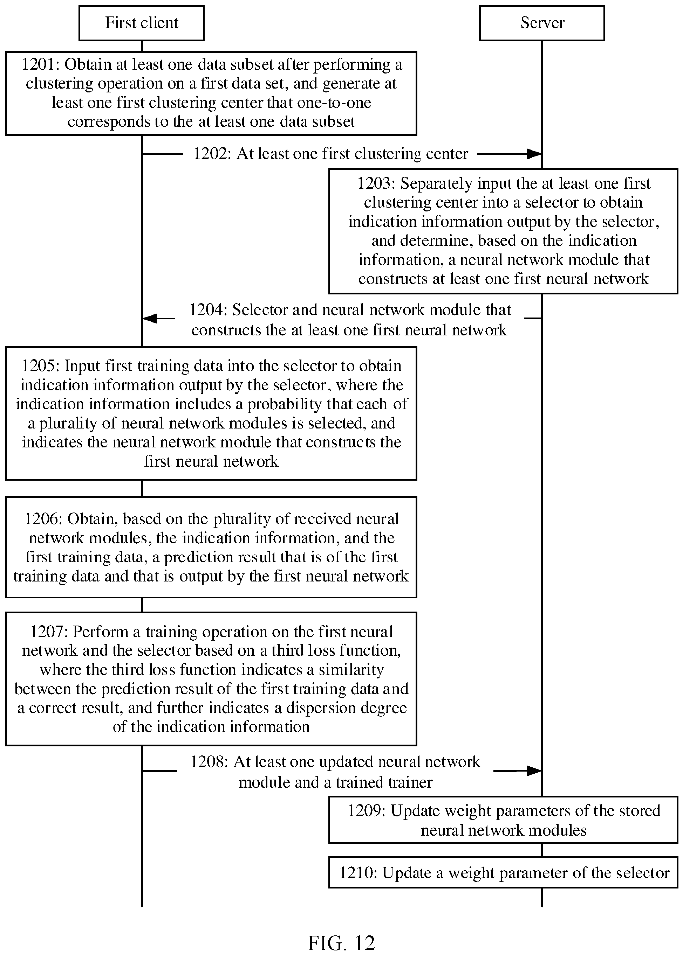

Specifically, refer to FIG. 12. FIG. 12 is a schematic flowchart of a machine learning model training method according to an embodiment of this application. The method may include the following steps.

1201: After performing a clustering operation on a first data set, a first client obtains at least one data subset, and generates at least one first clustering center that one-to-one corresponds to the at least one data subset.

In some embodiments of this application, after performing the clustering operation on the first data set to obtain the at least one data subset, the first client generates a first clustering center of each data subset, and further generates the at least one first clustering center that one-to-one corresponds to the at least one data subset.

1202: A server receives the at least one first clustering center sent by the first client.

In some embodiments of this application, after generating the at least one first clustering center, the first client sends the at least one first clustering center to the server. Correspondingly, the server receives the at least one first clustering center sent by the first client.

1203: The server separately inputs the at least one first clustering center into a selector to obtain indication information output by the selector, and determines, based on the indication information, a neural network module that constructs at least one first neural network.

In some embodiments of this application, the server separately inputs the at least one first clustering center into the selector, to obtain at least one piece of indication information that is output by the selector and that corresponds to the at least one first clustering center. Further, the neural network module configured to construct the at least one first neural network is selected based on one piece of indication information. For the foregoing selection process, refer to the description in step 1002 in the embodiment corresponding to FIG. 10. Details are not described herein again.

1204: The server sends, to the first client, the selector and the neural network module that constructs the at least one first neural network.

1205: The first client inputs first training data into the selector to obtain indication information output by the selector, where the indication information includes a probability that each of a plurality of neural network modules is selected, and indicates the neural network module that constructs the first neural network.

1206: The first client obtains, based on the plurality of received neural network modules, the indication information, and the first training data, a prediction result that is of the first training data and that is output by the first neural network.

1207: The first client performs a training operation on the first neural network and the selector based on a third loss function, where the third loss function indicates a similarity between the prediction result of the first training data and a correct result, and further indicates a dispersion degree of the indication information.

1208: The first client sends at least one updated neural network module and a trained trainer to the server

1209: The server updates weight parameters of the stored neural network modules.

1210: The server updates a weight parameter of the selector

In this embodiment of this application, for specific implementations of steps 1205 to 1210, refer to the descriptions of steps 1005 to 1010 in the embodiment corresponding to FIG. 10. Details are not described herein again. It should be noted that, the server may repeatedly perform steps 1201 to 1208, to implement interaction with each of a plurality of clients, and then perform steps 1209 and 1210, to complete one of a plurality of rounds of iteration. After performing step 1210, the server re-enters step 1201 to enter a next round of iteration.

In this embodiment of this application, the selector is used to perform the selection step of the neural network module, which helps improve accuracy of a selection process. The server performs the selection step, which helps release storage space of the client, and avoids occupation of computer resources of the client. In addition, only the clustering center is sent to the server, to avoid client information leakage as much as possible.

In this embodiment of this application, in the foregoing manner, different neural networks can be allocated to training data with different data features, in other words, personalized matching between the neural networks and the data features is implemented. Because the first client is any one of the plurality of clients, a neural network is allocated and trained for each of the plurality of clients based on a data feature of a training data set stored in the client, so that a same neural network can be trained by using training data with a same data feature, and different neural networks can be trained by using training data with different data features. Therefore, not only personalized matching between the neural networks and the data features is implemented, but also accuracy of a trained neural network is improved. The server selects a neural network adapted to each client to avoid sending all the neural network modules to the client, thereby reducing a waste of storage resources of the client, and avoiding occupation of computer resources of the client. This helps improve user experience.

2. Inference phase

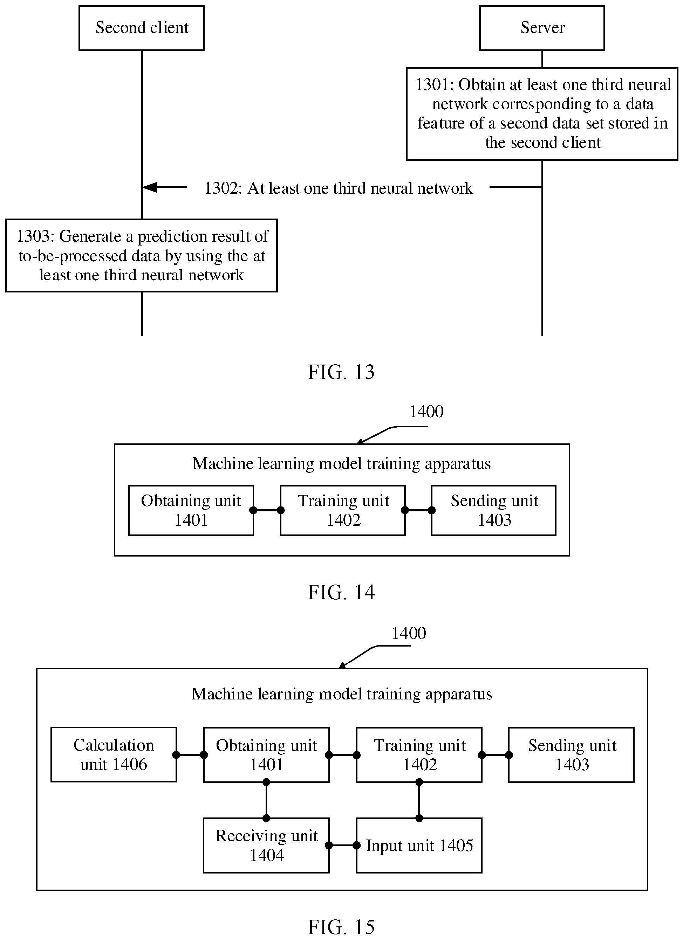

Specifically, refer to FIG. 13. FIG. 13 is a schematic flowchart of a data processing method according to an embodiment of this application. The method may include the following steps.

1301: A server obtains at least one third neural network corresponding to a data feature of a second data set stored in a second client.

In this embodiment of this application, the second client may be any one of a plurality of clients connected to the server, or may be a client that newly establishes a connection relationship with the server.

Specifically, in one case, the second client selects the at least one third neural network corresponding to the data feature of the second data set, and the server may receive second identification information sent by the second client, where the second identification information is identification information of the third neural network, or the second identification information is identification information of a neural network module that constructs the third neural network. Correspondingly, the server obtains one or more third neural networks to which the second identification information points, or obtains a neural network module that is used to construct one or more first neural networks and to which the second identification information points.

In another case, the server selects the at least one third neural network corresponding to the data feature of the second data set. In an implementation, after obtaining identification information of the second client, the server obtains, based on a second adaptation relationship, the at least one third neural network adapted to the identification information of the second client.

In another case, the second client performs a clustering operation on the second data set to obtain at least one second data subset, and generates at least one second clustering center corresponding to the at least one second data subset. After receiving the at least one second clustering center, the server separately inputs the at least one second clustering center into a selector, to obtain a neural network module configured to construct the at least one third neural network.

In another case, the server selects, based on identification information of the second client and second adaptation relationship, the at least one third neural network from at least two second neural networks, where the at least one third neural network includes a neural network highly adapted to the second data set.

In another case, the server randomly selects the at least one third neural network from a plurality of second neural networks.

1302: The server sends the at least one third neural network to the second client.

In this embodiment of this application, the server sends, to the second client, the at least one third neural network, or the neural network module configured to construct the at least one third neural network.

1303: The second client generates a prediction result of to-be-processed data by using the at least one third neural network.

In this embodiment of this application, the second client may randomly select one third neural network from the at least one third neural network, or may select, from the at least one third neural network based on the second data set, a third neural network that has a highest adaptation degree with the second data set, and generate the prediction result of the to-be-processed data by using the selected third neural network.

In this embodiment of this application, a training operation may be performed on a neural network in the training phase with reference to a data feature of a data set stored in each client, in other words, not only personalized customization of a neural network may be implemented in the training phase, but also personalized allocation of the neural network may be implemented in the inference phase, thereby maintaining coherence between the training phase and the inference phase, and helping improve accuracy of the inference phase.

Based on the foregoing embodiments, because data on a client needs to be used to train a neural network, to improve security of user data, an embodiment of this application further provides a method for encrypting the data on the client before a training operation is performed. Refer to the following descriptions.

Embodiment 1: Gradient-based module and packaging processed pre-training solution

A client A has a feature set $F_A = \{f_1, f_2, ..., f_N\}$, and a client B has a feature set $F_B = [f_{N+1}, f_{N+2}, ..., f_{N+M}]$. Data of the client A is $D_A = \{d_{1A}, d_{2A}, d_{3A}, ..., d_{PA}\}$, and the client B has data $D_B = \{d_{1B}, d_{2B}, d_{3B}, ..., d_{PB}\}$. A data feature of $d_{pA}$ is $F_A$, and a data feature of $d_{pB}$ is $F_B$. $d_p = [d_{pA}, d_{pB}]$ represents all feature values of a $p^{th}$ piece of data, and a user data label of the client B is $L = \{l_1, l_2, l_3, ..., l_P\}$. A model parameter of the client A is $W_A$, and a model parameter of the client B is $W_B$. A model gradient corresponding to the client A is $G_A$, and a model gradient corresponding to the client B is $G_B$.

Training process:

Step 1: The client A generates a public key $pk_A$ and a private key $sk_A$ for semi-full homomorphic encryption.

Step 2: The client B generates a public key $pk_B$ and a private key $sk_B$ for fully homomorphic encryption.

Step 3: The client A sends the public key $pk_A$ of the client A to the client B, and the client B sends the public key $pk_B$ of the client B to the client A.

Step 4: The client A calculates $U_A$ by using the model parameter $W_A$ of the client A and the data $D_A$ of the client A. The client A performs a packaging operation on $U_A$ to obtain $DU_A$. The client A performs homomorphic encryption on $DU_A$ by using the public key $pk_A$ of the client A, to obtain encrypted $[[DU_A]]\_pk_A$, and sends the encrypted $[[DU_A]]\_pk_A$ to the client B.

Packaging refers to splitting the data $U_A = [u_{A1}, u_{A2}, u_{A3}, ..., u_{AP,}]$ into small data packets $DU_A = \left[ Du_{A1}, Du_{A2}, ..., Du_{\frac{AP}{L}} \right]$ according to a specified packet length L, where $Du_{A1} = [u_{A1}, u_{A2}, ..., u_{AL}]$ and $Du_{A2} = [u_{AL+1}, u_{AL+2}, ..., u_{AL+L}]$.

Homomorphic encryption performed on $DU_A$ by using the public key $pk_A$ refers to separately encrypting $Du_{A1}, Du_{A2}, ..., Du_{AP/L}$ by using the public key $pk_A$.

Step 5: The client B calculates $U_{B-L} = U_B - L$ by using the model parameter $W_B$ of the client B, the data $D_B$ of the client B, and the label L, and the client B packages $U_{B-L}$ to obtain $DU_{B-L}$. The client B encrypts the packaged $DU_{B-L}$ by using the public key $pk_B$ of the client B to obtain $[[DU_{B-L}]]\_pk_B$, and sends $[[DU_{B-L}]]\_pk_B$ to the client A.

Step 6: The client A encrypts $DU_A$ of the client A by using the public key $pk_B$ of the client B to obtain $[[DU_A]]\_pk_B$, adds $[[DU_A]]\_pk_B$ to $DU_{B-L}$, namely, $[[DU_{B-L}]]\_pk_B$, that is obtained from the client B and encrypted by using the public key of the client B, and multiplies $[[DU_A]]\_pk_B + DU_{B-L}$ *by* a coded data set $D_A$ to obtain a gradient $[[G_A]]$ corresponding to a homomorphic encrypted model. $W_{A\_Noise}$ with a size obtained by multiplying a dimension of $W_A$ by a same packaging length size is generated and stored. $DW_{A\_Noise}$ is obtained by packaging $W_{A\_Noise}$, and the packaged $DW_{A\_Noise}$ is encrypted by using the public key of the client B to obtain $[[DW_{A\_Noise}]]$. The previously obtained gradient of the homomorphic encrypted model is added to $[DW_{A\_Noise}]]$, to obtain a homomorphic encrypted model gradient with noise. The homomorphic encrypted model gradient with noise is sent to the client B, and is decrypted by using the private key of the client B, and then the decrypted homomorphic encrypted model gradient with noise is sent back to the client A. The client A subtracts the stored noise $W_{A\_Noise}$ from a decrypted gradient value with noise, performs accumulation according to a packaging dimension to obtain a real model gradient, and updates the model parameter $W_A$.

Step 7: The client B encrypts $DU_{B-L}$ of the client B by using the public key $pk_A$ of the client A to obtain $[[DU_{B-L}]]\_pk_A$, adds $[[DU_{B-L}]]\_pk_A$ to $DU_A$, namely, $[[DU_A]]\_pk_A$, that is obtained from the client A and encrypted by using the public key of the client A, and multiplies $[[DU_A]]\_ pk_A + DU_A$ by coded $D_B$ to obtain a gradient corresponding to a homomorphic encrypted model $W_B$. $W_{B\_Noise}$ with a size obtained by multiplying a dimension of $W_B$ by a same packaging length size is generated and stored. $DW_{B\_Noise}$ is obtained by packaging $W_{B\_Noise}$, and $DW_{A\_Noise}$ is encrypted by using the public key of the client A to obtain $[[DW_{A\_Noise}]]$. A previously obtained parameter of the homomorphic encrypted model is added to $[[DW_{B\_Noise}]]$, to obtain a homomorphic encrypted model gradient $[[G_B]]$ with noise. The homomorphic encrypted model gradient with noise is sent to the client A and decrypted by using the private key of the client A, and then is sent back to the client B. The client B subtracts the stored noise $W_{B\_Noise}$ from a decrypted gradient value with noise, performs accumulation according to a packaging dimension to obtain a real model gradient, and updates the model parameter $W_B$.

Step 8: Determine whether a convergence condition is met. If the convergence condition is met, end the training process. Otherwise, go back to step 4.

Inference process:

For fitting and classification problems,
the clients A and B distributedly calculate $U_A$ and $U_B$, and one of them calculates a value of $U_A + U_B$.
For classification problems,
the clients A and B respectively calculate $U_A$ and $-U_B$.
The clients A and B add 0 to data based on a preset fixed quantity of digits before the decimal point to obtain $IU_A$ and $-IU_B$.
For example, $U_A = 1234.5678$ and $-U_B = 12.3456$. If the preset quantity of digits before the decimal point are 6,

$$IU_A = 001234.5678 \text{ and } -U_B = 000012.3456.$$

The clients A and B obtain and compare digits from highest digits each time based on the preset quantity of digits. If the digits are the same, the clients A and B compare a next preset quantity of digits. If a value relationship of the digits can be determined, the clients A and B stop comparison and determine a value relationship between $U_A$ and $-U_B$ based on the comparison relationship. If a specified quantity of digits are obtained for comparison, the clients A and B stop the comparison between $U_A = -U_B$. For example, if the preset quantity of digits are two, 00 of $IU_A$ obtained by the client A is compared with 00 of $-IU_B$ obtained by the client B. Because the two digits are the same, 12 of $IU_A$ obtained by the client A is compared with 00 of $-IU_B$ obtained by the client B. Because 12 is greater than 00, $U_A$ is greater than $-U_B$.
Data extraction and comparison processes are as follows:
The client A intercepts data $I_a$ and the client B intercepts data $I_b$.
The Client B generates a public-private key pair and sends the public key to the client A.
The client A generates a random integer RIntX and encrypts RIntX by using the public key sent by the client B, to obtain $[[RIntX]]$. The client A sends $[[RIntX]] - I_a$ to B.
The client B separately adds 0 to 99 to the received $[[RIntX]] - I_a$, and then performs decryption to obtain DRIntX $= [DRIntX_0, DRIntX_1, DRIntX_2, ... DRIntX_{99}]$. Then, the client B subtracts 1 from data at an $I_b^{th}$ location, subtracts 2 from data at a location greater than $I_b$, performs a modulo operation for each number in DRIntX based on preset modulus and sends a result to A.
The client A performs a modulo operation on RIntX of the client A according to a preset modulus that is the same as that of B, and then compares RIntX obtained after the modulo operation with the received data at the $I_a^{th}$ location. If the RIntX obtained after the modulo operation is equal to the received data, it indicates $I_a < I_b$. If a modulo operation difference is 1, $I_a = I_b$. If the modulo operation difference is 2, $I_a > I_b$.
If $U_A$ is greater than $-U_B$, $U_A + U_B > 0$. If $U_A$ is less than $-U_B$, $U_A + U_B < 0$. If $U_A$ is equal to

$$-U_B, \ U_A + U_B = 0.$$

Embodiment 2: Classification tree-based module pre-training solution

A module may be implemented in a pre-training manner, and may perform joint learning of different features of a plurality of users.
A client A has a feature set $F_A = \{f_1, f_2, ..., f_N\}$, and a client B has a feature set $F_B = [f_{N+1}, f_{N+2}, ..., f_{N+M}]$. Data of the client A is $D_A = \{d_{1A}, d_{2A}, d_{3A}, ..., d_{PA}\}$, and the client B has data $D_B = \{d_{1B}, d_{2B}, d_{3B}, ..., d_{PB}\}$. A data feature of $d_{pA}$ is $F_A$, and a data feature of $d_{pB}$ is $F_B$. $d_p = [d_{pA}, d_{pB}]$ represents all feature values of a $p^{th}$ piece of data, and a user data label of the client B is $L = \{l_1, l_2, l_3, ..., l_p\}$. $l_p = 0$ represents class 0 and $l_p = 1$ represents class 1.

Training process:

Step 1: The client generates a public key $pk_B$ and a private key $sk_B$ for partially homomorphic encryption (full homomorphic encryption), and uses the public key $pk_B$ to encrypt the data label L to obtain encrypted data $pk_B(L) = \{pk_B(l_1), pk_B(l_2), pk_B(l_3),..., pk_B(l_p)\}$.

Step 2: The client B sends the public key $pk_B$ and the encrypted label $pk_B(L)$ to the client A, and sets a node number h to 0, where all data belongs to a node h. An inference tree output by B is empty, and initialized splitting trees of A and B are empty.

Step 3: The client A generates a feature splitting solution set $S_A = \{s_{1A}, s_{2A}, s_{3A},... , s_{IA}\}$ based on local data, and divides, according to a splitting policy $s_{iA}$, data belonging to the node h into two child nodes 2*h and 2*h+1 on the left and right. A sum of encrypted data labels of the child nodes 2*h and 2*h+1 is calculated:

$$sum\_pk\_label_{s_{iA}\_2h} = \left(\sum_{p \text{ belonging to the node } 2h} pk_B(l_p)\right) + pk_B(r_{s_{iA}\_2h});$$

and

$$sum\_pk\_label_{s_{iA}\_2h\_1} = \left(\sum_{p \text{ belonging to the node } 2h+1} pk_B(l_p)\right) + pk_B(r_{s_{iA}\_2h\_1}).$$

In addition, a quantity of data in the two sets is calculated:

$$sum\_num_{s_{iA}\_2h} = \sum_{p \text{ belonging to the node } 2h} 1;$$

and

$$sum\_label_{set\_s_{iA}\_2h\_1} = \sum_{p \text{ belonging to the node } 2h+1} 1,$$

where

$r_{s_{iA}\_2h}$ indicates a random number, and $pk_B(r_{s_{iA}\_2h})$ indicates that $pk_B$ is used to encrypt the random number $r_{s_{iA}\_2h}$.

The client B generates a feature splitting solution set $S_B = \{s_{1B}, s_{2B}, s_{3B},..., s_{IB}\}$ based on local data, and divides, according to a splitting policy $s_{iB}$, data belonging to the node h into two child nodes 2*h and 2*h+1 on the left and right. A sum of data labels of the child nodes 2*h and 2*h+1 is calculated:

$$sum\_label_{s_{iB}\_2h} = \sum_{p \text{ belonging to the node } 2h} l_p;$$

and

$$sum\_label_{s_{iB}\_2h\_1} = \sum_{p \text{ belonging to the node } 2h+1} l_p.$$

In addition, a quantity of data in the two sets is calculated:

$$sum\_num_{s_{iB}\_2h} = \sum_{p \text{ belonging to the node } 2h} 1;$$

and

$$sum\_num_{s_{iB}\_2h\_1} = \sum_{p \text{ belonging to the node } 2h+1} 1,$$

where

$r_{s_{iA}\_2h}$ indicates a random number, and $pk_B(r_{s_{iA}\_2h})$ indicates that $pk_B$ is used to encrypt the random number $r_{s_{iA}\_2h}$.

Step 4: The client A sends $sum\_pk\_label_{s_{iA}\_2h}$ and $sum\_pk\_label_{s_{iA}\_2h\_1}$ to the client B.

Step 5: The client B decrypts $sum\_pk\_label_{s_{iA}\_2h}$ and $sum\_pk\_label_{s_{iA}\_2h\_1}$ by using $sk_B$ to obtain sum_r_label$_{s_{iA}\_2h}$ and sum_r_label$_{s_{iA}\_2h\_1}$, and sends sum_r_label$_{s_{iA}\_2h}$ and sum_r_label$_{s_{iA}\_2h\_1}$ to the client A. The client A receives sum_r_label$_{s_{iA}\_2h}$ and sum_r_label$_{s_{iA}\_2h\_1}$ and minus the corresponding random numbers to obtain sum_label$_{s_{iA}\_2h}$ and sum_label$_{s_{iA}\_2h\_1}$.

Step 6: The client A uses sum_label$_{s_{iA}\_2h}$, sum_label$_{-s_{iA}\_2h\_1}$, sum_num$_{s_{iA}\_2h}$, and sum_num$_{s_{iA}\_2h\_1}$ to calculate gini coefficients under various splittings, and selects a splitting solution corresponding to a minimum gini coefficient and records the splitting solution as $s_{minA}$ and a Gini coefficient value gini$_{minA}$. The client B uses sum_label$_{s_{iB}\_2h}$, sum_label$_{s_{iB}\_2h\_1}$, sum_num$_{s_{iB}\_2h}$, and sum_num$_{s_{iB}\_2h\_1}$ to calculate gini coefficients under various splittings, and selects a splitting solution corresponding to a minimum gini coefficient and records the splitting solution as $s_{minB}$ and a Gini coefficient value gini$_{minB}$.

Step 7: The client A sends gini$_{minA}$ to the client B. The client B compares gini$_{minB}$ and gini$_{minA}$, and returns a comparison result to A. A h' node of an inference tree of B is marked as a number of a party with a smaller gini value.

Step 8: The party with a smaller gini value splits data according to a corresponding data splitting solution and sends a splitting result to the other party, and writes a splitting policy into a h$^{th}$ node of a splitting tree.

Step 9: h = h + 1. Repeat steps 3 to 7 until a specified quantity of repeated steps.

Step 10: B marks a leaf node as a category if most data in the leaf node belongs to the category.

Inference process:

Step 1: Based on the inference tree, select A and B as processing parties, and select the processing parties.

Step 2: Select a location of a next node according to a splitting policy of the splitting tree.

Repeat 1 and 2 until the leaf node. A classification result is a category marked by the class.

Embodiment 3: Regression tree-based module pre-training solution

A module may be implemented in a pre-training manner, and may perform joint learning of different features of a plurality of users.

A client A has a feature set $F_A$ = {$f_1$,$f_2$,..., $f_N$}, and a client B has a feature set $F_B$ = [$f_{N+1}$,$f_{N+2}$,...,$f_{N+M}$]. Data of the client A is $D_A$ = {$d_{1A}$,$d_{2A}$,$d_{3A}$,....,$d_{pA}$}, and the client B has data $D_B$ = {$d_{1B}$,$d_{2B}$,$d_{3B}$,..., $d_{pB}$}. A data feature of $d_{pA}$ is $F_A$, and a data feature of $d_{pB}$ is $F_B$. $d_p$ = [$d_{pA}$,$d_{pB}$] represents all feature values of a p$^{th}$ piece of data, and a user data label of the client B is L = {$l_1$,$l_2$,$l_3$,...,$l_P$}.

Training process:

Step 1: The client generates a public key pk$_B$ and a private key sk$_B$ for partially homomorphic encryption (full homomorphic encryption), and uses the public key pk$_B$ to encrypt the data label L to obtain encrypted data pk$_B$(L) = fpkb ($l_1$),pk$_B$($l_2$),pk$_B$($l_3$),..., pk$_B$($l_P$)} and a square value pk$_B$(L$^2$) = $\{pk_B(l_1^2), pk_B(l_2^2), pk_B(l_2^2), ..., pk_B(l_2^2)\}$ of the data label.

Step 2: The client B sends the public key pk$_B$ and the encrypted label pk$_B$(L) to the client A, and sets a node number h to 0, where all data belongs to a node h. An inference tree output by B is empty, and initialized splitting trees of A and B are empty.

Step 3: The client A generates a feature splitting solution set $S_A$ = {$s_{1A}$,$s_{2A}$,$s_{3A}$,...,$s_{IA}$} based on local data, and divides, according to a splitting policy $s_{iA}$, data belonging to the node h into two child nodes 2*h and 2*h+1 on the left and right. A sum of encrypted data labels of the child nodes 2*h and 2*h+1 is calculated:

$$\text{sum\_pk\_label}_{s_{iA}\_2h} = \left(\sum\nolimits_{p \text{ belonging to the node } 2h} pk_B(l_p)\right) + pk_B(r_{s_{iA}\_2h});$$

and

$$\text{sum\_pk\_label}_{s_{iA}\_2h\_1} = \left(\sum\nolimits_{p \text{ belonging to the node } 2h+1} pk_B(l_p)\right) + pk_B(r_{s_{iA}\_2h\_1}).$$

In addition, a quantity of data in the two sets is calculated:

$$\text{sum\_num}_{s_{iA}\_2h} = \sum\nolimits_{p \text{ belonging to the node } 2h} 1;$$

and

$$\text{sum\_label}_{\text{set\_s}_{iA\_2h\_1}} = \sum_{\text{p belonging to the node 2h+1}} 1,$$

where

$r_{s_{iA\_2h}}$ indicates a random number, and $pk_B(r_{s_{iA\_2h}})$ indicates that $pk_B$ is used to encrypt the random number $r_{s_{iA\_2h}}$.

The client B generates a feature splitting solution set $S_B = \{s_{1B}, s_{2B}, s_{3B}, ..., s_{lB}\}$ based on local data, and divides, according to a splitting policy $s_{iB}$, data belonging to the node h into two child nodes 2*h and 2*h+1 on the left and right. A sum of data labels of the child nodes 2*h and 2*h+1 is calculated:

$$\text{sum\_label}_{s_{iB\_2h}} = \sum_{\text{p belonging to the node 2h}} l_p;$$

and

$$\text{sum\_label}_{s_{iB\_2h\_1}} = \sum_{\text{p belonging to the node 2h+1}} l_p.$$

In addition, a quantity of data in the two sets is calculated:

$$\text{sum\_num}_{s_{iB\_2h}} = \sum_{\text{p belonging to the node 2h}} 1;$$

and

$$\text{sum\_num}_{s_{iB\_2h\_1}} = \sum_{\text{p belonging to the node 2h+1}} 1,$$

where

$r_{s_{iA\_2h}}$ indicates a random number, and $pk_B(r_{s_{iA\_2h}})$ indicates that $pk_B$ is used to encrypt the random number $r_{s_{iA\_2h}}$.

Step 4: The client A sends sum_pk_label$_{s_{iA\_2h}}$ and sum_pk_label$_{s_{iA\_2h\_1}}$ to the client B.

Step 5: The client B uses $sk_B$ to decrypt sum_pk_label$_{s_{iA\_2h}}$ and sum_pk_label$_{s_{iA\_2h\_1}}$ to obtain sum_r_label$_{s_{iA\_2h}}$ and sum_r_label$_{s_{iA\_2h\_1}}$, and sends sum_r_label$_{s_{iA\_2h}}$ and sum_r_label$_{s_{iA\_2h\_1}}$ to the client A.

The client A receives sum_r_label$_{s_{iA\_2h}}$ and sum_r_label$_{s_{iA\_2h}-1}$, and subtracts the corresponding random numbers to obtain sum_label$_{s_{iA\_2h}}$ and sum_label$_{s_{iA\_2h\_1}}$.

Step 6: The client A uses sum_label$_{s_{iA\_2h}}$, sum_label$_{s_{iA\_2h\_1}}$, sum_num$_{s_{iA\_2h}}$, and sum_num$_{s_{iA\_2h\_1}}$ to calculate an average value under various splittings:

$$\text{ave}_{s_{iA\_2h}} = \frac{\text{sum\_label}_{s_{iA\_2h}}}{\text{sum\_num}_{s_{iA\_2h}}};$$

and

$$\text{ave}_{s_{iA\_2h\_1}} = \frac{\text{sum\_label}_{s_{iA\_2h\_1}}}{\text{sum\_num}_{s_{iA\_2h\_1}}}.$$

$pk_B$ is used to encrypt ave$_{s_{iA\_2h}}$ and ave$_{s_{iA\_2h\_1}}$ to obtain $pk_B(\text{ave}_{s_{iA\_2h}})$ and $pk_B(\text{ave}_{s_{iA\_2h\_1}})$, and calculate a square difference of encrypted data:

$$\text{var\_pk}_{s_{iA\_2h}} = \left( \sum_{\text{p belonging to the node 2h}} pk_B(l_p^2) + pk_B(\text{ave}_{s_{iA\_2h}}) - 2 * pk_B(l_p) * \text{ave}_{s_{iA\_2h}} \right) +$$

$$pk_B(r_{s_{iA\_2h}});$$

and

$$\text{var\_pk}_{s_{iA\_2h\_1}} = \left(\sum_{p \text{ belonging to the node } 2h} \text{pk}_B\left(l_p^2\right) + \text{pk}_B\left(\text{ave}_{s_{iA\_2h\_1}}\right) - 2 * \text{pk}_B\left(l_p\right) * \text{ave}_{s_{iA\_2h\_1}}\right) + \text{pk}_B\left(r_{s_{iA\_2h\_1}}\right).$$

The client B uses sum_label$_{s_{iB\_2h}}$, sum_label$_{s_{iB\_2h\_1}}$, sum_num$_{s_{iB\_2h}}$, and sum_num$_{s_{iB\_2h\_1}}$ to calculate an average value under various splittings:

$$\text{ave}_{s_{iB\_2h}} = \frac{\text{sum\_label}_{s_{iB\_2h}}}{\text{sum\_num}_{s_{iB\_2h}}};$$

and

$$\text{ave}_{s_{iB\_2h\_1}} = \frac{\text{sum\_label}_{s_{iB\_2h\_1}}}{\text{sum\_num}_{s_{iB\_2h\_1}}}.$$

The client B calculates a square difference:

$$\text{var\_}_{s_{iB\_2h}} = \sum_{p \text{ belonging to the node } 2h} l_p^2 + \text{ave}_{s_{iB\_2h}} - 2 * l_p * \text{ave}_{s_{iA\_2h}};$$

and

$$\text{var\_}_{s_{iB\_2h\_1}} = \sum_{p \text{ belonging to the node } 2h+1} l_p^2 + \text{ave}_{s_{iB\_2h\_1}} - 2 * l_p * \text{ave}_{s_{iA\_2h\_1}}.$$

Step 7: The client A sends var_pk$_{s_{iA\_2h}}$ and var_pk$_{s_{iA\_2h\_1}}$ to the client B.

Step 8: The client B uses sk$_B$ to decrypt var_pk$_{s_{iA\_2h}}$ and var_pk$_{s_{iA\_2h\_1}}$ to obtain and var_r$_{s_{iA\_2h}}$ and var_r$_{s_{iA\_2h\_1>}}$ and sends var_r$_{s_{iA\_2h}}$ and var_r$_{s_{iA\_2h\_1}}$ to the client A.

The client A receives var_r$_{s_{iA\_2h}}$ and var_r$_{s_{iA\_2h\_1}}$, and subtracts corresponding random numbers to obtain var$_{s_{iA\_2h}}$ and var$_{s_{iA\_2h\_1}}$.

Step 10: The clients A and B respectively select a splitting with a minimum variance, marked as s$_{minA}$, a square difference var$_{minA}$, s$_{minB}$, and a square difference var$_{minB}$.

Step 11: The client A sends var$_{minA}$ to the client B. The client B compares var$_{minB}$ and var$_{minA}$, and returns a comparison result to the client A. A h$^{th}$ node of an inference tree of B is marked as a number of a party with a smaller gini value.

Step 12: The party with a smaller variance splits data according to a corresponding data splitting solution, sends a splitting result to the other party, and writes a splitting policy into a h$^{th}$ node of a splitting tree.

Step 13: h = h + 1. Repeats steps 3 to 7 until a specified quantity of repeated steps.

Step 14: B marks a leaf node as a category if most data in the leaf node belongs to the category.

Inference process:

Step 1: Based on the inference tree, select A and B as processing parties.

Step 2: Select a location of a next node according to a splitting policy of the splitting tree.

Repeat the steps 1 and 2 until the leaf node. A classification result is a category marked by the class.

According to the embodiments corresponding to FIG. 1 to FIG. 13, to better implement the foregoing solutions in embodiments of this application, the following further provides related devices configured to implement the foregoing solutions. For details, refer to FIG. 14. FIG. 14 is a schematic diagram of a structure of a machine learning model training apparatus according to an embodiment of this application. A machine learning model training apparatus 1400 is used in a first client. A plurality of clients are communicatively connected to a server. The server stores a plurality of modules, and the plurality of modules are configured to construct machine learning models. The first client is any one of the plurality of clients. The machine learning model training apparatus 1400 is configured to perform a plurality of rounds of iteration, and the machine learning model training apparatus 1400 includes an obtaining unit 1401, a training unit 1402, and a sending unit 1403. In one of the plurality of rounds of iteration, the obtaining unit 1401 is configured to obtain at least one first machine learning model, where the at least one first machine learning model is selected based on a data feature of a first training data set stored in the machine learning model training apparatus, the training unit 1402 is configured to perform a training operation on the at least one first machine learning model by using the first data set, to obtain at least one trained first machine learning model, and the sending unit 1403 is configured to send at least one updated module included in the at least one trained first machine learning model to the server, where the updated module is used by the server to update weight parameters of the stored modules.

In this embodiment of this application, different neural networks can be allocated to training data with different data features, in other words, personalized matching between the neural networks and the data features is implemented. In addition, because the first client is any one of the plurality of clients, a neural network is allocated and trained for each of the plurality of clients based on a data feature of a training data set stored in the client, so that a same neural network can be trained by using training data with a same data feature, and different neural networks can be trained by using training data with different data features. Therefore, not only personalized matching between the neural networks and the data features is implemented, but also accuracy of a trained neural network is improved.

In a possible design, the plurality of modules are configured to construct at least two second machine learning models, and the at least one first machine learning model is selected from the at least two second machine learning models; or a module configured to construct the at least one first machine learning model is selected from the plurality of modules.

In a possible design, refer to FIG. 15. FIG. 15 is a schematic diagram of a structure of a machine learning model training apparatus according to an embodiment of this application. The machine learning model is a neural network, and the plurality of modules stored in the server are neural network modules. The machine learning model training apparatus 1400 stores a first adaptation relationship, the first adaptation relationship includes a plurality of adaptation values, and the adaptation value indicates an adaptation degree between the first data set and a second neural network. The apparatus 1400 further includes a receiving unit 1404, configured to receive the plurality of neural network modules sent by the server. The obtaining unit 1401 is specifically configured to select at least one first neural network from at least two second neural networks based on the first adaptation relationship, where the at least one first neural network includes at least one first neural network with a high adaptation value with the first data set.

In a possible design, an adaptation value between the first data set and one second neural network corresponds to a function value of a first loss function, and a smaller function value of the first loss function indicates a larger adaptation value between the first data set and the second neural network. The first loss function indicates a similarity between a prediction result of first training data and a correct result of the first data. The prediction result of the first data is obtained based on the second neural network, and the first data and the correct result of the first data are obtained based on the first data set.

In a possible design, an adaptation value between the first data set and one second neural network corresponds to a first similarity, and a larger first similarity indicates a larger adaptation value between the first data set and the second neural network. The first similarity is a similarity between the second neural network and a third neural network, and the third neural network is a neural network with highest accuracy of outputting a prediction result in a previous round of iteration.

In a possible design, the similarity between the second neural network and the third neural network is determined in any one of the following manners: inputting same data to the second neural network and the third neural network, and comparing a similarity between output data of the second neural network and output data of the third neural network; or calculating a similarity between a weight parameter matrix of the second neural network and a weight parameter matrix of the third neural network.

In a possible design, refer to FIG. 15. The machine learning model is a neural network, and the apparatus 1400 further includes a receiving unit 1404 and an input unit 1405. The receiving unit 1404 is configured to receive a selector sent by the server, where the selector is a neural network configured to select, from the plurality of neural network modules, at least one neural network module that matches the data feature of the first data set. The input unit 1405 is configured to input training data into the selector based on the first data set, to obtain indication information output by the selector, where the indication information includes a probability that each of the plurality of neural network modules is selected, and indicates a neural network module that constructs at least one first neural network. The receiving unit 1404 is further configured to receive, from the serving end, the neural network module configured to construct the at least one first neural network.

In a possible design, refer to FIG. 15. The machine learning model is a neural network, and the plurality of modules stored in the server are neural network modules. The apparatus 1400 further includes a calculation unit 1406, configured to calculate an adaptation value between the first data set and each of the at least one first neural network. The first data set includes a plurality of pieces of first training data. A larger adaptation value between the first training data and the first neural network indicates a greater degree of modifying a weight parameter of the first neural network in a process of training the first neural network by using the first training data.

In a possible design, refer to FIG. 15. The calculation unit 1406 is specifically configured to: cluster the first data set to obtain at least two data subsets, where a first data subset is a subset of the first data set, and the first data subset is any one of the at least two data subsets; and generate an adaptation value between the first data subset and one first neural network based on the first data subset and the first loss function, where a smaller function value of the first loss function indicates a larger adaptation value between the first data subset and the first neural network. The first loss function indicates a similarity between a prediction result of first training data and a correct result of the first data. The prediction result of the first data is obtained based on the first neural network, and the first data and the correct result of the first data are obtained based on the first data subset. An adaptation value between the first data subset and the first neural network is determined as an adaptation value between each piece of data in the first data subset and the first neural network.

In a possible design, the machine learning model is a neural network, and the plurality of modules stored in the server are neural network modules. The training unit 1402 is specifically configured to perform a training operation on the first neural network based on a second loss function by using the first data set. The first data set includes a plurality of pieces of first training data. The second loss function indicates a similarity between a first prediction result and a correct result of the first training data, and further indicates a similarity between the first prediction result and a second prediction result. The first prediction result is a prediction result that is of the first training data and that is output by the first neural network after the first training data is input into the first neural network. The second prediction result is a prediction result that is of the first training data and that is output by a fourth neural network after the first training data is input into the fourth neural network. The fourth neural network is a first neural network on which no training operation is performed.

In a possible design, refer to FIG. 15. The first data set includes a plurality of pieces of first training data and a correct result of each piece of first training data. The receiving unit 1404 is further configured to receive the selector sent by the server, where the selector is a neural network configured to select, from the plurality of neural network modules, the at least one first neural network module that matches the data feature of the first data set. The training unit 1402 is specifically configured to: input the first training data into the selector, to obtain the indication information output by the selector, where the indication information includes the probability that each of the plurality of neural network modules is selected, and indicates the neural network module that constructs the first neural network; obtain, based on the plurality of neural network modules, the indication information, and the first training data, a prediction result that is of the first training data and that is output by the first neural network; and perform a training operation on the first neural network and the selector based on a third loss function, where the third loss function indicates a similarity between the prediction result of the first training data and a correct result, and further indicates a dispersion degree of the indication information. The sending unit 1403 is further configured to send a trained selector to the server

It should be noted that content such as information exchange or an execution process between the modules/units in the machine learning model training apparatus 1400 is based on a same concept as the method embodiments corresponding to FIG. 4 to FIG. 13 in this application. For specific content, refer to the descriptions in the foregoing method embodiments in this application. Details are not described herein again.

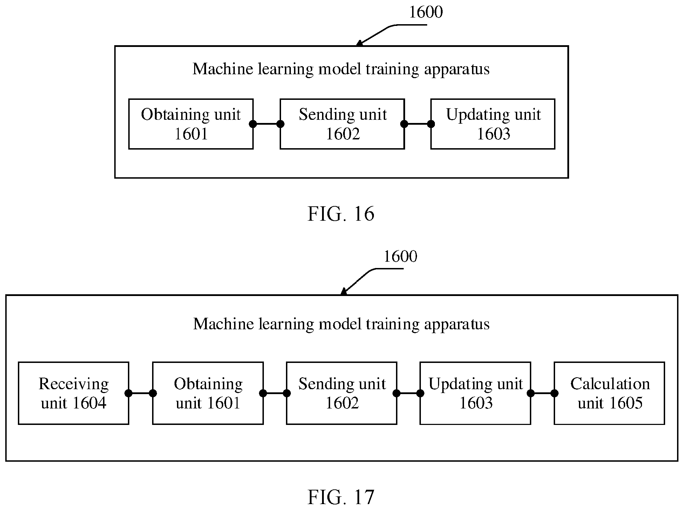

An embodiment of this application further provides a machine learning model training apparatus. For details, refer to FIG. 16. FIG. 16 is a schematic diagram of a structure of a machine learning model training apparatus according to an embodiment of this application. A machine learning model training apparatus 1600 is used in a server, and the server is communicatively connected to a plurality of clients. The server stores a plurality of modules, and the plurality of modules are configured to construct machine learning models. A first client is any one of the plurality of clients. The machine learning model training apparatus 1600 is configured to perform a plurality of rounds of iteration, and the machine learning model training apparatus 1600 includes an obtaining unit 1601, a sending unit 1602, and an updating unit 1603. In one of the plurality of rounds of iteration, the obtaining unit 1601 is configured to obtain at least one first machine learning model corresponding to the first client, where the first client is one of the plurality of clients, and the at least one first machine learning model corresponds to a data feature of a first data set stored in the first client, the sending unit 1602 is configured to send the at least one first machine learning model to the first client, where the at least one first machine learning model indicates the first client to perform a training operation on the at least one first machine learning model by using the first data set, to obtain at least one trained first machine learning model, and the updating unit 1603 is configured to receive, from the first client, at least one updated neural network module included in the at least one trained first machine learning model, and update weight parameters of the stored neural network modules based on the at least one updated neural network module.

In this embodiment of this application, in the foregoing manner, different neural networks can be allocated to training data with different data features, in other words, personalized matching between the neural networks and the data features is implemented. Because the first client is any one of the plurality of clients, a neural network is allocated and trained for each of the plurality of clients based on a data feature of a training data set stored in the client, so that a same neural network can be trained by using training data with a same data feature, and different neural networks can be trained by using training data with different data features. Therefore, not only personalized matching between the neural networks and the data features is implemented, but also accuracy of a trained neural network is improved. The server selects a neural network adapted to each client to avoid sending all the neural network modules to the client, thereby reducing a waste of storage resources of the client, and avoiding occupation of computer resources of the client. This helps improve user experience.

In a possible design, the plurality of modules are configured to construct at least two second machine learning models, and the at least one first machine learning model is selected from the at least two second machine learning models; or a module configured to construct the at least one first machine learning model is selected from the plurality of modules.

In a possible design, refer to FIG. 17. FIG. 17 is a schematic diagram of a structure of a machine learning model training apparatus according to an embodiment of this application. The machine learning model is a neural network, and the plurality of modules stored in the machine learning model training apparatus 1600 are neural network modules. The machine learning model training apparatus 1600 stores a second adaptation relationship, the second adaptation relationship includes a plurality of adaptation values, and the adaptation value indicates an adaptation degree between training data stored in a client and a second neural network. The apparatus 1600 further includes: a receiving unit 1604, configured to receive an adaptation value that is between the first data set and at least one second neural network and that is sent by the first client, and update the second adaptation relationship. The obtaining unit 1601 is specifically configured to select at least one first neural network from a plurality of second neural networks based on the second adaptation relationship, where the at least one first neural network includes a neural network with a high adaptation value with the first data set.

In a possible design, refer to FIG. 17. The machine learning model is a neural network, and the plurality of modules stored in the machine learning model training apparatus 1600 are neural network modules. The apparatus 1600 further includes: a receiving unit 1604, configured to receive first identification information sent by the first client, where the first identification information is identification information of the first neural network, or the first identification information is identification information of a neural network module that constructs the first neural network. The sending unit 1602 is specifically configured to send, to the first client, the first neural network to which the first identification information points, or send, to the first client, the neural network module that constructs the first neural network and to which the first identification information points.

In a possible design, refer to FIG. 17. The machine learning model is a neural network, and the plurality of modules stored in the machine learning model training apparatus 1600 are neural network modules. The machine learning model training apparatus 1600 is further configured with a selector, and the apparatus further includes: a receiving unit 1604, configured to receive at least one clustering center sent by the first client, and perform a clustering operation on the first data set to obtain at least one data subset, where one clustering center in the at least one clustering center is a clustering center of one data subset in the at least one data subset. The obtaining unit 1601 is specifically configured to: separately input the clustering center into the selector to obtain indication information output by the selector, and determine, based on the indication information, a neural network module that constructs at least one first neural network, where the indication information includes a probability that each of the plurality of neural network modules is selected. The sending unit 1602 is specifically configured to send, to the first client, the neural network module that constructs the at least one first neural network.

In a possible design, refer to FIG. 17. The machine learning model is a neural network, and the plurality of modules stored in the machine learning model training apparatus 1600 are neural network modules. One neural network is divided into at least two submodules, the neural network modules stored in the machine learning model training apparatus 1600 are divided into at least two groups corresponding to the at least two submodules, and different neural network modules in a same group have a same function. After the weight parameters of the stored neural network modules based on the at least one updated neural network module are updated, the apparatus 1600 further includes: a calculation unit 1605, configured to calculate a similarity between different neural network modules in at least two neural network modules included in a same group, and combine two neural network modules whose similarity is greater than a preset threshold.

In a possible design, the different neural network modules include a second neural network module and a first neural network module, and a similarity between the second neural network module and the first neural network module is determined in any one of the following manners: separately inputting same data to the second neural network module and the first neural network module, and comparing a similarity between output data of the second neural network module and output data of the first neural network module; or calculating a similarity between a weight parameter matrix of the second neural network module and a weight parameter matrix of the first neural network module.

It should be noted that content such as information exchange or an execution process between the modules/units in the machine learning model training apparatus 1600 is based on a same concept as the method embodiments corresponding to FIG. 4 to FIG. 13 in this application. For specific content, refer to the descriptions in the foregoing method embodiments in this application. Details are not described herein again.

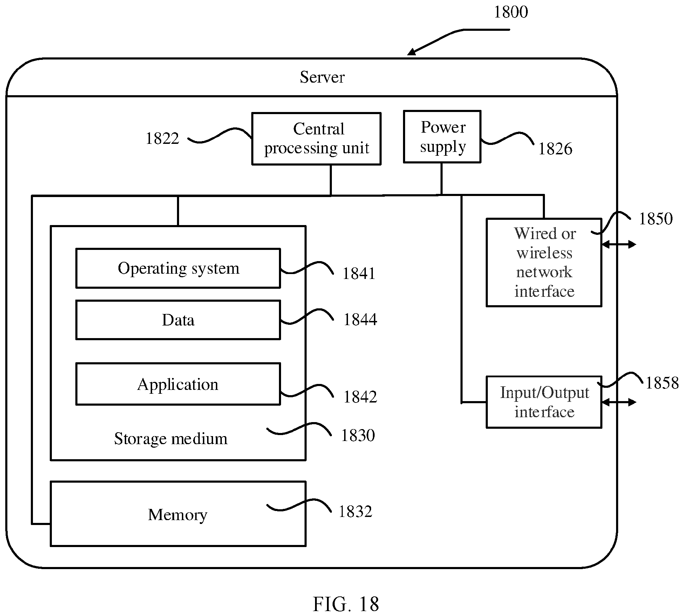

An embodiment of this application further provides a server. FIG. 18 is a schematic diagram of a structure of a server according to an embodiment of this application. The machine learning model training apparatus 1400 described in the embodiments corresponding to FIG. 14 and FIG. 15 may be deployed on a server 1800, and is configured to implement functions of the first client in the embodiments corresponding to FIG. 4 to FIG. 13. Alternatively, when the first client is configured on a device in a server form, the machine learning model training apparatus 1600 described in the embodiments corresponding to FIG. 16 and FIG. 17 may be deployed on the server 1800, and is configured to implement functions of the server in the embodiments corresponding to FIG. 4 to FIG. 13. Specifically, the server 1800 may vary greatly with different configurations or performance, and may include one or more central processing units (central processing units, CPU) 1822 (for example, one or more processors) and a memory 1832, and one or more storage media 1830 (for example, one or more mass storage devices) that store an application 1842 or data 1844. The memory 1832 and the storage medium 1830 may be transient storage or persistent storage. A program stored in the storage medium 1830 may include one or more modules (not shown in the figure), and each module may include a series of instruction operations for the server. Further, the central processing unit 1822 may be configured to communicate with the storage medium 1830, and perform, on the server 1800, a series of instruction operations in the storage medium 1830.

The server 1800 may further include one or more power supplies 1826, one or more wired or wireless network interfaces 1850, one or more input/output interfaces 1858, and/or one or more operating systems 1841, for example, Windows ServerTM, Mac OS XTM, UnixTM, LinuxTM, and FreeBSDTM.

In one case, in this embodiment of this application, the central processing unit 1822 is configured to perform the machine learning model training method performed by the first client in the embodiments corresponding to FIG. 4 to FIG. 13. Specifically, machine learning model training includes a plurality of rounds of iteration. In one of the plurality of rounds of iteration, the central processing unit 1822 is specifically configured to:

obtain at least one first machine learning model, where the at least one first machine learning model is selected based on a data feature of a first data set stored in the first client; perform a training operation on the at least one first machine learning model by using the first data set, to obtain at least one trained first machine learning model; and send at least one updated module included in the at least one trained first machine learning model to the server, where the updated module is used by the server to update weight parameters of the stored modules.

The central processing unit 1822 is further configured to perform other steps performed by the first client in FIG. 4 to FIG. 13. For a specific implementation in which the central processing unit 1422 performs the steps performed by the first client in the embodiments corresponding to FIG. 4 to FIG. 13 and brought beneficial effects, refer to the descriptions in the method embodiments corresponding to FIG. 4 to FIG. 13. Details are not described herein again.

In another case, in this embodiment of this application, the central processing unit 1822 is configured to perform the machine learning model training method performed by the server in the embodiments corresponding to FIG. 4 to FIG. 13. Specifically, machine learning model training includes a plurality of rounds of iteration. In one of the plurality of rounds of iteration, the central processing unit 1822 is specifically configured to:

obtain at least one first machine learning model corresponding to the first client, where the first client is one of a plurality of clients, and the at least one first machine learning model corresponds to a data feature of a first data set stored in the first client; send the at least one first machine learning model to the first client, where the at least one first machine learning model indicates the first client to perform a training operation on the at least one first machine learning model by using the first data set, to obtain at least one trained first machine learning model; and receive, from the first client, at least one updated neural network module included in the at least one trained first machine learning model, and update weight parameters of the stored neural network modules based on the at least one updated neural network module.

The central processing unit 1822 is further configured to perform other steps performed by the server in FIG. 4 to FIG. 13. For a specific implementation in which the central processing unit 1422 performs the steps performed by the server in the embodiments corresponding to FIG. 4 to FIG. 13 and brought beneficial effects, refer to the descriptions in the method embodiments corresponding to FIG. 4 to FIG. 13. Details are not described herein again.

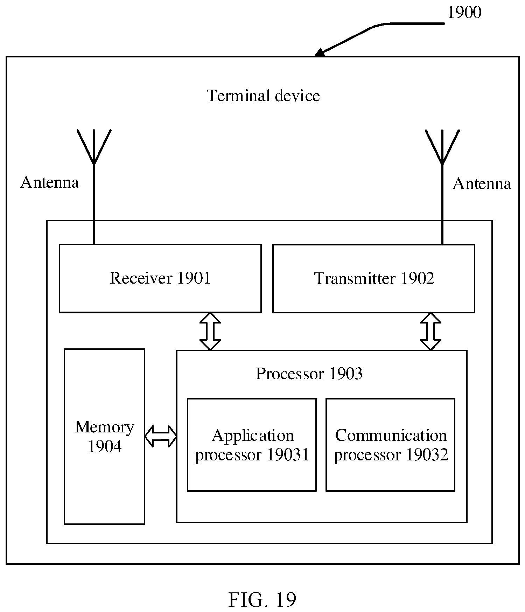

An embodiment of this application further provides a terminal device. FIG. 19 is a schematic diagram of a structure of a terminal device according to an embodiment of this application. When a client is configured on a device in a mobile device form, the machine learning model training apparatus 1400 described in the embodiments corresponding to FIG. 14 and FIG. 15 may be deployed on a terminal device 1900, and is configured to implement functions of the first client in the embodiments corresponding to FIG. 4 to FIG. 13. Specifically, the terminal device 1900 includes a receiver 1901, a transmitter 1902, a processor 1903, and a memory 1904 (there may be one or more processors 1903 in the terminal device 1900, and one processor is used as an example in FIG. 19). The processor 1903 may include an application processor 19031 and a communication processor 19032. In some embodiments of this application, the receiver 1901, the transmitter 1902, the processor 1903, and the memory 1904 may be connected through a bus or in another manner.

The memory 1904 may include a read-only memory and a random access memory, and provide instructions and data to the processor 1903. A part of the memory 1904 may further include a non-volatile random access memory (non-volatile random access memory, NVRAM). The memory 1904 stores a processor and operation instructions, an executable module or a data structure, a subset thereof, or an extended set thereof. The operation instructions may include various operation instructions for implementing various operations.

The processor 1903 controls an operation of the terminal device. In specific application, components of the terminal device are coupled together through a bus system. In addition to a data bus, the bus system may further include a power bus, a control bus, a status signal bus, and the like. However, for clear description, various types of buses in the figure are referred to as the bus system.

The methods disclosed in the foregoing embodiments of this application may be applied to the processor 1903, or may be implemented by the processor 1903. The processor 1903 may be an integrated circuit chip, and has a signal processing capability. In an implementation process, the steps in the foregoing methods may be implemented by using a hardware integrated logical circuit in the processor 1903, or by using instructions in a form of software. The processor 1903 may be a general-purpose processor, a digital signal processor (digital signal processor, DSP), a microprocessor or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1903 may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1904. The processor 1903 reads information in the memory 1904 and completes the steps in the foregoing methods in combination with hardware of the processor

The receiver 1901 may be configured to receive input digit or character information, and generate signal input related to a related setting and function control of the terminal device. The transmitter 1902 may be configured to output digit or character information through a first interface. The transmitter 1902 may be further configured to send instructions to a disk group through the first interface, to modify data in the disk group. The transmitter 1902 may further include a display device such as a display screen.

In this embodiment of this application, the application processor 19031 is configured to perform functions of the first client in the embodiments corresponding to FIG. 4 to FIG. 13. It should be noted that, for a specific implementation in which the application processor 19031 performs the functions of the first client in the embodiments corresponding to FIG. 4 to FIG. 13 and brought beneficial effects, refer to the descriptions in the method embodiments corresponding to FIG. 4 to FIG. 13. Details are not described herein again.

An embodiment of this application further provides a computer-readable storage medium. The computer-readable storage medium stores a program. When the program is run on a computer, the computer is enabled to perform the steps performed by the first client in the methods described in the embodiments shown in FIG. 4 to FIG. 13, or the computer is enabled to perform the steps performed by the server in the methods described in the embodiments shown in FIG. 4 to FIG. 13.

An embodiment of this application further provides a computer program product. When the computer program product runs on a computer, the computer is enabled to perform the steps performed by the first client in the methods described in the embodiments shown in FIG. 4 to FIG. 13, or the computer is enabled to perform the steps performed by the server in the methods described in the embodiments shown in FIG. 4 to FIG. 13.

An embodiment of this application further provides a circuit system, where the circuit system includes a processing circuit. The processing circuit is configured to perform the steps performed by the first client in the methods described in the embodiments shown in FIG. 4 to FIG. 13, or the processing circuit is configured to perform the steps performed by the server in the methods described in the embodiments shown in FIG. 4 to FIG. 13.

The machine learning model training apparatus, the client, and the server provided in embodiments of this application may be specifically chips. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the neural network training method described in the embodiments shown in FIG. 4 to FIG. 13. Optionally, the storage unit is a storage unit in the chip, for example, a register or a cache; or the storage unit may be a storage unit that is in a radio access device and that is located outside the chip, for example, a read-only memory (read-only memory, ROM), another type of static storage device that can store static information and instructions, or a random access memory (random access memory, RAM).

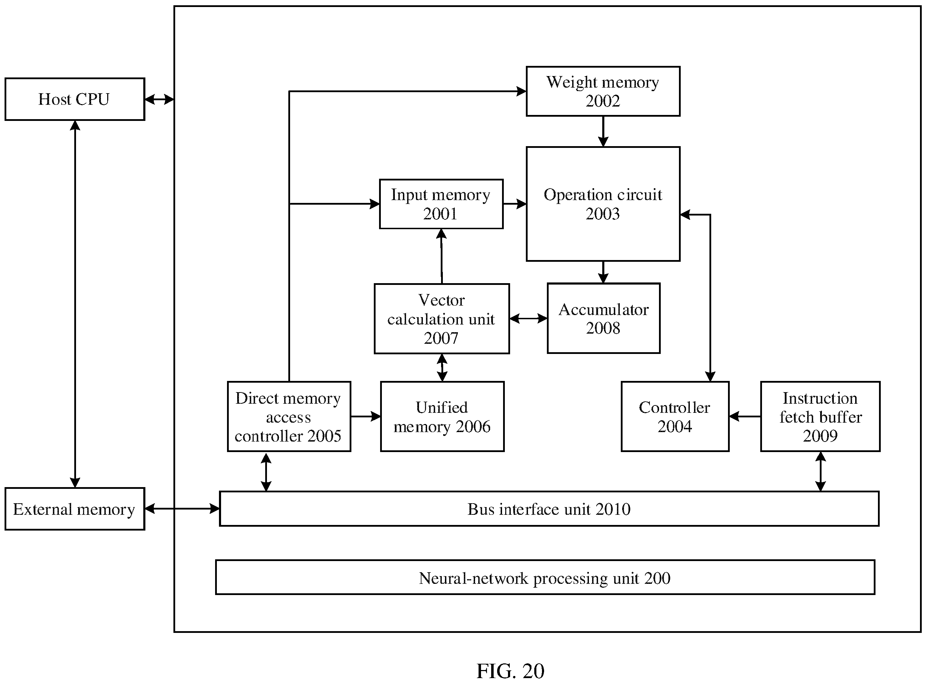

Specifically, refer to FIG. 20. FIG. 20 is a schematic diagram of a structure of a chip according to an embodiment of this application. The chip may be represented as a neural-network processing unit NPU 200. The NPU 200 is mounted to a host CPU (Host CPU) as a coprocessor, and the host CPU allocates a task. A core part of the NPU is an operation circuit 2003. The operation circuit 2003 is controlled by a controller 2004 to extract matrix data in a memory and perform a multiplication operation.

In some implementations, the operation circuit 2003 includes a plurality of processing engines (processing engines, PEs). In some implementations, the operation circuit 2003 is a two-dimensional systolic array. The operation circuit 2003 may alternatively be a one-dimensional systolic array or another electronic circuit that can perform mathematical operations such as multiplication and addition. In some implementations, the operation circuit 2003 is a general-purpose matrix processor.

For example, it is assumed that there are an input matrix A, a weight matrix B, and an output matrix C. The operation circuit fetches data corresponding to the matrix B from a weight memory 2002, and buffers the data on each PE in the operation circuit. The operation circuit fetches data of the matrix A from an input memory 2001, to perform a matrix operation on the matrix B, and stores an obtained partial result or an obtained final result of the matrix into an accumulator (accumulator) 2008.

A unified memory 2006 is configured to store input data and output data. Weight data is directly transferred to the weight memory 2002 through a direct memory access controller (direct memory access controller, DMAC) 2005. The input data is also transferred to the unified memory 2006 through the DMAC.

BIU is the abbreviation of a bus interface unit. A bus interface unit 2010 is used for interaction between an AXI bus and the DMAC and an instruction fetch buffer (Instruction Fetch Buffer, IFB) 2009.

The bus interface unit 2010 (Bus Interface Unit, BIU for short) is used by the instruction fetch buffer 2009 to obtain instructions from an external memory, and is further used by the direct memory access controller 2005 to obtain original data of the input matrix A or the weight matrix B from the external memory.

The DMAC is mainly configured to transfer input data in the external memory DDR to the unified memory 2006, transfer the weight data to the weight memory 2002, or transfer the input data to the input memory 2001.

A vector calculation unit 2007 includes a plurality of operation processing units. If required, further processing is performed on an output of the operation circuit, for example, vector multiplication, vector addition, an exponential operation, a logarithmic operation, or value comparison. The vector calculation unit 2007 is mainly configured to perform network calculation at a non-convolutional/fully connected layer in a neural network, for example, batch normalization (batch normalization), pixel-level summation, and upsampling on a feature plane.

In some implementations, the vector calculation unit 2007 can store a processed output vector in the unified memory 2006. For example, the vector calculation unit 2007 may apply a linear function and/or a non-linear function to the output of the operation circuit 2003, for example, perform linear interpolation on a feature plane extracted at a convolutional layer. For another example, the linear function and/or the non-linear function are/is applied to a vector of an accumulated value to generate an activation value. In some implementations, the vector calculation unit 2007 generates a normalized value, a pixel-level summation value, or a normalized value and a pixel-level summation value. In some implementations, the processed output vector can be used as an activation input of the operation circuit 2003, for example, to be used in a subsequent layer in the neural network.

The instruction fetch buffer (instruction fetch buffer) 2009 connected to the controller 2004 is configured to store instructions used by the controller 2004. The unified memory 2006, the input memory 2001, the weight memory 2002, and the instruction fetch buffer 2009 are all on-chip memories. The external memory is private for a hardware architecture of the NPU.

An operation at each layer in a recurrent neural network may be performed by the operation circuit 2003 or the vector calculation unit 2007.

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiment is merely an example. The units described as separate parts may or may not be physically separate, and parts displayed as units may or may not be physical units, may be located in one location, or may be distributed on a plurality of network units. Some or all the modules may be selected based on actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including an application-specific integrated circuit, a dedicated CLU, a dedicated memory, a dedicated component, and the like. Generally, any function performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

**Claims**

1. A machine learning model training method, wherein the method is applied to a first client, a plurality of clients are communicatively connected to a server, the server stores a plurality of modules, the plurality of modules are configured to construct machine learning models, the first client is any one of the plurality of clients, training of the machine learning model comprises a plurality of rounds of iteration, and one of the plurality of rounds of iteration comprises:

   obtaining at least one first machine learning model, wherein the at least one first machine learning model is selected based on a data feature of a first data set stored in the first client;
   performing a training operation on the at least one first machine learning model by using the first data set, to obtain at least one trained first machine learning model; and
   sending at least one updated module comprised in the at least one trained first machine learning model to the server, wherein the updated module is used by the server to update weight parameters of the stored modules.

2. The method according to claim 1, wherein

   the plurality of modules are configured to construct at least two second machine learning models, and the at least one first machine learning model is selected from the at least two second machine learning models; or
   a module configured to construct the at least one first machine learning model is selected from the plurality of modules.

3. The method according to claim 2, wherein the machine learning model is a neural network, the plurality of modules stored in the server are neural network modules, the first client stores a first adaptation relationship, the first adaptation relationship comprises a plurality of adaptation values, and the adaptation value indicates an adaptation degree between the first data set and a second neural network;
   before the obtaining at least one second machine learning module, the method further comprises:

   receiving the plurality of neural network modules sent by the server; and
   the obtaining at least one machine learning model comprises:
   selecting at least one first neural network from at least two second neural networks based on the first adaptation relationship, wherein the at least one first neural network comprises a neural network with a high adaptation value with the first data set.

4. The method according to claim 3, wherein an adaptation value between the first data set and one second neural network corresponds to a function value of a first loss function, and a smaller function value of the first loss function indicates a larger adaptation value between the first data set and the second neural network; and
   the first loss function indicates a similarity between a prediction result of first data and a correct result of the first data, the prediction result of the first data is obtained based on the second neural network, and the first data and the correct result of the first data are obtained based on the first data set.

5. The method according to claim 3, wherein an adaptation value between the first data set and one second neural network corresponds to a first similarity, and a larger first similarity indicates a larger adaptation value between the first data set and the second neural network; and
the first similarity is a similarity between the second neural network and a third neural network, and the third neural network is a neural network with highest accuracy of outputting a prediction result in a previous round of iteration.

6. The method according to claim 5, wherein the similarity between the second neural network and the third neural network is determined in any one of the following manners:

separately inputting same data to the second neural network and the third neural network, and comparing a similarity between output data of the second neural network and output data of the third neural network; or
calculating a similarity between a weight parameter matrix of the second neural network and a weight parameter matrix of the third neural network.

7. The method according to claim 1, wherein the machine learning model is a neural network, and the method further comprises:

receiving a selector sent by the server, wherein the selector is a neural network configured to select, from the plurality of neural network modules, at least one neural network module that matches the data feature of the first data set;
inputting training data into the selector based on the first data set, to obtain indication information output by the selector, wherein the indication information comprises a probability that each of the plurality of neural network modules is selected, and indicates a neural network module that constructs at least one first neural network; and
receiving, from the serving end, the neural network module configured to construct the at least one first neural network.

8. The method according to any one of claims 1 to 7, wherein the machine learning model is a neural network, and the plurality of modules stored in the server are neural network modules; and after the obtaining at least one first machine learning model, the method further comprises:

calculating an adaptation value between the first data set and each of the at least one first neural network, wherein the first data set comprises a plurality of pieces of first training data, and a larger adaptation value between the first training data and the first neural network indicates a greater degree of modifying a weight parameter of the first neural network in a process of training the first neural network by using the first training data.

9. The method according to claim 8, wherein the calculating an adaptation value between the first data set and each of the at least one first neural network comprises:

clustering the first data set to obtain at least two data subsets, wherein a first data subset is a subset of the first data set, and the first data subset is any one of the at least two data subsets; and
generating an adaptation value between the first data subset and one first neural network based on the first data subset and the first loss function, wherein a smaller function value of the first loss function indicates a larger adaptation value between the first data subset and the first neural network, wherein
the first loss function indicates a similarity between a prediction result of first data and a correct result of the first data, the prediction result of the first data is obtained based on the first neural network, the first data and the correct result of the first data are obtained based on the first data subset, and the adaptation value between the first data subset and the first neural network is determined as an adaptation value between each piece of data in the first data subset and the first neural network.

10. The method according to any one of claims 1 to 7, wherein the machine learning model is a neural network, the plurality of modules stored in the server are neural network modules, and the performing a training operation on the at least one first machine learning model by using the first data set comprises:

performing a training operation on the first neural network based on a second loss function by using the first data set, wherein

the first data set comprises a plurality of pieces of first training data; the second loss function indicates a similarity between a first prediction result and a correct result of the first training data, and further indicates a similarity between the first prediction result and a second prediction result; the first prediction result is a prediction result that is of the first training data and that is output by the first neural network after the first training data is input into the first neural network; the second prediction result is a prediction result that is of the first training data and that is output by a fourth neural network after the first training data is input into the fourth neural network; and the fourth neural network is a first neural network on which no training operation is performed.

11. The method according to claim 7, wherein the first data set comprises a plurality of pieces of first training data and a correct result of each piece of first training data, and the method further comprises:

receiving the selector sent by the server, wherein the selector is a neural network configured to select, from the plurality of neural network modules, the at least one first neural network module that matches the data feature of the first data set;
the performing a training operation on the at least one first machine learning model by using the first data set comprises:

inputting the first training data into the selector to obtain the indication information output by the selector, wherein the indication information comprises the probability that each of the plurality of neural network modules is selected, and indicates the neural network module that constructs the first neural network; obtaining, based on the plurality of neural network modules, the indication information, and the first training data, a prediction result that is of the first training data and that is output by the first neural network; and performing a training operation on the first neural network and the selector based on a third loss function, wherein the third loss function indicates a similarity between the prediction result of the first training data and a correct result, and further indicates a dispersion degree of the indication information; and
the method further comprises: sending a trained selector to the server.

12. A machine learning model training method, wherein the method is applied to a server, the server is communicatively connected to a plurality of clients, the server stores a plurality of modules, the plurality of modules are configured to construct machine learning models, the first client is any one of the plurality of clients, training of the machine learning model comprises a plurality of rounds of iteration, and one of the plurality of rounds of iteration comprises:

obtaining at least one first machine learning model corresponding to the first client, wherein the first client is one of the plurality of clients, and the at least one first machine learning model corresponds to a data feature of a first data set stored in the first client;
sending the at least one first machine learning model to the first client, wherein the at least one first machine learning model indicates the first client to perform a training operation on the at least one first machine learning model by using the first data set, to obtain at least one trained first machine learning model; and
receiving, from the first client, at least one updated neural network module comprised in the at least one trained first machine learning model, and updating weight parameters of the stored neural network modules based on the at least one updated neural network module.

13. The method according to claim 12, wherein

the plurality of modules are configured to construct at least two second machine learning models, and the at least one first machine learning model is selected from the at least two second machine learning models; or
a module configured to construct the at least one first machine learning model is selected from the plurality of modules.

14. The method according to claim 13, wherein the machine learning model is a neural network, the plurality of modules stored in the server are neural network modules, the server stores a second adaptation relationship, the second adaptation relationship comprises a plurality of adaptation values, the adaptation value indicates an adaptation degree between training data stored in a client and a second neural network, and the method further comprises:

receiving an adaptation value that is between the first data set and at least one second neural network and that is sent by the first client, and updating the second adaptation relationship; and
the obtaining at least one first neural network comprises:
selecting the at least one first neural network from a plurality of second neural networks based on the second adaptation relationship, wherein the at least one first neural network comprises a neural network with a high adaptation value with the first data set.

**15.** The method according to claim 12, wherein the machine learning model is a neural network, the plurality of modules stored in the server are neural network modules, and the method further comprises:

receiving first identification information sent by the first client, wherein the first identification information is identification information of the first neural network, or the first identification information is identification information of a neural network module that constructs the first neural network; and
the sending the at least one first machine learning model to the first client comprises:
sending, to the first client, the first neural network to which the first identification information points, or sending, to the first client, the neural network module that constructs the first neural network and to which the first identification information points.

**16.** The method according to claim 12, wherein the machine learning model is a neural network, the plurality of modules stored in the server are neural network modules, the server is further configured with a selector, and the method further comprises:

receiving at least one clustering center sent by the first client, and performing a clustering operation on the first data set to obtain at least one data subset, wherein one clustering center in the at least one clustering center is a clustering center of one data subset in the at least one data subset;
the obtaining at least one first machine learning model corresponding to the first client comprises:

separately inputting the clustering center into the selector to obtain indication information output by the selector, and determining, based on the indication information, a neural network module that constructs at least one first neural network, wherein the indication information comprises a probability that each of the plurality of neural network modules is selected; and
the sending the at least one first machine learning model to the first client comprises:
sending, to the first client, the neural network module that constructs the at least one first neural network.

**17.** The method according to claim 12 or 14, wherein the machine learning model is a neural network, the plurality of modules stored in the server are neural network modules, one neural network is divided into at least two submodules, the neural network modules stored in the server are divided into at least two groups corresponding to the at least two submodules, and different neural network modules in a same group have a same function; and after the updating weight parameters of the stored neural network modules based on the at least one updated neural network module, the method further comprises:
calculating a similarity between different neural network modules in at least two neural network modules comprised in a same group, and combining two neural network modules whose similarity is greater than a preset threshold.

**18.** The method according to claim 17, wherein the different neural network modules comprise a second neural network module and a first neural network module, and a similarity between the second neural network module and the first neural network module is determined in any one of the following manners:

separately inputting same data to the second neural network module and the first neural network module, and comparing a similarity between output data of the second neural network module and output data of the first neural network module; or
calculating a similarity between a weight parameter matrix of the second neural network module and a weight parameter matrix of the first neural network module.

**19.** A machine learning model training apparatus, wherein the apparatus is used in a first client, a plurality of clients are communicatively connected to a server, the server stores a plurality of modules, the plurality of modules are configured to construct machine learning models, the first client is any one of the plurality of clients, the machine learning model training apparatus is configured to perform a plurality of rounds of iteration, and the machine learning model training apparatus comprises an obtaining unit, a training unit, and a sending unit; and in one round of the plurality of rounds of iteration,

the obtaining unit is configured to obtain at least one first machine learning model, wherein the at least one first machine learning model is selected based on a data feature of a first training data set stored in the machine learning model training apparatus,

the training unit is configured to perform a training operation on the at least one first machine learning model by using the first data set, to obtain at least one trained first machine learning model, and

the sending unit is configured to send at least one updated module comprised in the at least one trained first machine learning model to the server, wherein the updated module is used by the server to update weight parameters of the stored modules.

20. The apparatus according to claim 19, wherein

the plurality of modules are configured to construct at least two second machine learning models, and the at least one first machine learning model is selected from the at least two second machine learning models; or

a module configured to construct the at least one first machine learning model is selected from the plurality of modules.

21. The apparatus according to claim 20, wherein the machine learning model is a neural network, the plurality of modules stored in the server are neural network modules, the machine learning model training apparatus stores a first adaptation relationship, the first adaptation relationship comprises a plurality of adaptation values, and the adaptation value indicates an adaptation degree between the first data set and a second neural network;

the apparatus further comprises a receiving unit, configured to receive the plurality of neural network modules sent by the server; and

the obtaining unit is specifically configured to select at least one first neural network from at least two second neural networks based on the first adaptation relationship, wherein the at least one first neural network comprises at least one first neural network with a high adaptation value with the first data set.

22. The apparatus according to claim 21, wherein an adaptation value between the first data set and one second neural network corresponds to a function value of a first loss function, and a smaller function value of the first loss function indicates a larger adaptation value between the first data set and the second neural network; and

the first loss function indicates a similarity between a prediction result of first training data and a correct result of the first data, the prediction result of the first data is obtained based on the second neural network, and the first data and the correct result of the first data are obtained based on the first data set.

23. The apparatus according to claim 21, wherein an adaptation value between the first data set and one second neural network corresponds to a first similarity, and a larger first similarity indicates a larger adaptation value between the first data set and the second neural network; and

the first similarity is a similarity between the second neural network and a third neural network, and the third neural network is a neural network with highest accuracy of outputting a prediction result in a previous round of iteration.

24. The apparatus according to claim 23, wherein the similarity between the second neural network and the third neural network is determined in any one of the following manners:

separately inputting same data to the second neural network and the third neural network, and comparing a similarity between output data of the second neural network and output data of the third neural network; or

calculating a similarity between a weight parameter matrix of the second neural network and a weight parameter matrix of the third neural network.

25. The apparatus according to claim 19, wherein the machine learning model is a neural network, and the apparatus further comprises a receiving unit and an input unit;

the receiving unit is configured to receive a selector sent by the server, wherein the selector is a neural network configured to select, from thethe plurality of neural network modules, at least one neural network module that matches the data feature of the first data set;

the input unit is configured to input training data into the selector based on the first data set, to obtain indication information output by the selector, wherein the indication information comprises a probability that each of the plurality of neural network modules is selected, and indicates a neural network module that constructs at least one first neural network; and

the receiving unit is further configured to receive, from the server, the neural network module configured to construct the at least one first neural network.

26. The apparatus according to any one of claims 19 to 25, wherein the machine learning model is a neural network, the plurality of modules stored in the server are neural network modules, and the apparatus further comprises:

a calculation unit, configured to calculate an adaptation value between the first data set and each of the at least one first neural network, wherein the first data set comprises a plurality of pieces of first training data, and a larger adaptation value between the first training data and the first neural network indicates a greater degree of modifying a weight parameter of the first neural network in a process of training the first neural network by using the first training data.

27. The apparatus according to claim 26, wherein the calculation unit is specifically configured to:

cluster the first data set to obtain at least two data subsets, wherein a first data subset is a subset of the first data set, and the first data subset is any one of the at least two data subsets; and generate an adaptation value between the first data subset and one first neural network based on the first data subset and the first loss function, wherein a smaller function value of the first loss function indicates a larger adaptation value between the first data subset and the first neural network, wherein the first loss function indicates a similarity between a prediction result of first data and a correct result of the first data, the prediction result of the first data is obtained based on the first neural network, the first data and the correct result of the first data are obtained based on the first data subset, and the adaptation value between the first data subset and the first neural network is determined as an adaptation value between each piece of data in the first data subset and the first neural network.

28. The apparatus according to any one of claims 19 to 25, wherein the machine learning model is a neural network, and the plurality of modules stored in the server are neural network modules;

the training unit is specifically configured to perform a training operation on the first neural network based on a second loss function by using the first data set; and the first data set comprises a plurality of pieces of first training data; the second loss function indicates a similarity between a first prediction result and a correct result of the first training data, and further indicates a similarity between the first prediction result and a second prediction result; the first prediction result is a prediction result that is of the first training data and that is output by the first neural network after the first training data is input into the first neural network; the second prediction result is a prediction result that is of the first training data and that is output by a fourth neural network after the first training data is input into the fourth neural network; and the fourth neural network is a first neural network on which no training operation is performed.

29. The apparatus according to claim 25, wherein the first data set comprises a plurality of pieces of first training data and a correct result of each piece of first training data;

the receiving unit is further configured to receive the selector sent by the server, wherein the selector is a neural network configured to select, from the plurality of neural network modules, the at least one first neural network module that matches the data feature of the first data set; the training unit is specifically configured to:

input the first training data into the selector to obtain the indication information output by the selector, wherein the indication information comprises the probability that each of the plurality of neural network modules is selected, and indicates the neural network module that constructs the first neural network; obtain, based on the plurality of neural network modules, the indication information, and the first training data, a prediction result that is of the first training data and that is output by the first neural network; and perform a training operation on the first neural network and the selector based on a third loss function, wherein the third loss function indicates a similarity between the prediction result of the first training data and a correct result, and further indicates a dispersion degree of the indication information; and the sending unit is further configured to send a trained selector to the server.

30. A machine learning model training apparatus, wherein the apparatus is used in a server, the server are communicatively connected to a plurality of clients, the server stores a plurality of modules, the plurality of modules are configured to construct machine learning models, the first client is any one of the plurality of clients, the machine learning model training apparatus is configured to perform a plurality of rounds of iteration, and the machine learning model training apparatus comprises an obtaining unit, a training unit, and an updating unit; and in one round of the plurality of rounds of iteration,

the obtaining unit is configured to obtain at least one first machine learning model corresponding to the first client, wherein the first client is one of the plurality of clients, and the at least one first machine learning model corresponds to a data feature of a first data set stored in the first client,

the sending unit is configured to send the at least one first machine learning model to the first client, wherein the at least one first machine learning model indicates the first client to perform a training operation on the at least one first machine learning model by using the first data set, to obtain at least one trained first machine learning model, and

the updating unit is configured to receive, from the first client, at least one updated neural network module comprised in the at least one trained first machine learning model, and update weight parameters of the stored neural network modules based on the at least one updated neural network module.

31. The apparatus according to claim 30, wherein

the plurality of modules are configured to construct at least two second machine learning models, and the at least one first machine learning model is selected from the at least two second machine learning models; or a module configured to construct the at least one first machine learning model is selected from the plurality of modules.

32. The apparatus according to claim 31, wherein the machine learning model is a neural network, the plurality of modules stored in the machine learning model training apparatus are neural network modules, the machine learning model training apparatus stores a second adaptation relationship, the second adaptation relationship comprises a plurality of adaptation values, the adaptation value indicates an adaptation degree between training data stored in a client and a second neural network, and the apparatus further comprises:

a receiving unit, configured to receive an adaptation value that is between the first data set and at least one second neural network and that is sent by the first client, and update the second adaptation relationship; and the obtaining unit is specifically configured to select the at least one first neural network from a plurality of second neural networks based on the second adaptation relationship, wherein the at least one first neural network comprises a neural network with a high adaptation value with the first data set.

33. The apparatus according to claim 30, wherein the machine learning model is a neural network, the plurality of modules stored in the machine learning model training apparatus are neural network modules, and the apparatus further comprises:

a receiving unit, configured to receive first identification information sent by the first client, wherein the first identification information is identification information of the first neural network, or the first identification information is identification information of a neural network module that constructs the first neural network; and the sending unit is specifically configured to send, to the first client, the first neural network to which the first identification information points, or send, to the first client, the neural network module that constructs the first neural network and to which the first identification information points.

34. The apparatus according to claim 30, wherein the machine learning model is a neural network, the plurality of modules stored in the machine learning model training apparatus are neural network modules, the machine learning model training apparatus is further configured with a selector, and the apparatus further comprises:

a receiving unit, configured to receive at least one clustering center sent by the first client, and perform a clustering operation on the first data set to obtain at least one data subset, wherein one clustering center in the at least one clustering center is a clustering center of one data subset in the at least one data subset; the obtaining unit is specifically configured to separately input the clustering center into the selector to obtain indication information output by the selector, and determine, based on the indication information, a neural network module that constructs at least one first neural network, wherein the indication information comprises a probability that each of the plurality of neural network modules is selected; and the sending unit is specifically configured to send, to the first client, the neural network module that constructs the at least one first neural network.

35. The apparatus according to claim 30 or 32, wherein the machine learning model is a neural network, the plurality of modules stored in the machine learning model training apparatus are neural network modules, one neural network is divided into at least two submodules, the neural network modules stored in the machine learning model training apparatus are divided into at least two groups corresponding to the at least two submodules, different neural network modules in a same group have a same function, and the apparatus further comprises:

a calculation unit, configured to calculate a similarity between different neural network modules in at least two neural network modules comprised in a same group, and combine two neural network modules whose similarity is greater than a preset threshold.

36. The apparatus according to claim 35, wherein the different neural network modules comprise a second neural network module and a first neural network module, and a similarity between the second neural network module and the first neural network module is determined in any one of the following manners:

separately inputting same data to the second neural network module and the first neural network module, and comparing a similarity between output data of the second neural network module and output data of the first neural network module; or

calculating a similarity between a weight parameter matrix of the second neural network module and a weight parameter matrix of the first neural network module.

37. A training device, comprising a processor, wherein the processor is coupled to a memory; the memory stores program instructions; and when the program instructions stored in the memory are executed by the processor, the method according to any one of claims 1 to 11 is implemented, or when the program instructions stored in the memory are executed by the processor, the method according to any one of claims 12 to 18 is implemented.

38. A computer-readable storage medium, comprising a program, wherein when the program is run on a computer, the computer is enabled to perform the method according to any one of claims 1 to 11, or the computer is enabled to perform the method according to any one of claims 12 to 18.

39. A circuit system, wherein the circuit system comprises a processing circuit, and the processing circuit is configured to perform the method according to any one of claims 1 to 11, or the processing circuit is configured to perform the method according to any one of claims 12 to 18.

40. A computer program product comprising instructions, wherein when the computer program product runs on a computer, the computer is enabled to perform the method according to any one of claims 1 to 18.

Intelligent information chain

Intelligent product and industry application

| Translation/<br>Text analysis/... | Voice/Vision/<br>Image/... |
|---|---|

| Data | Data<br>processing: | Data training/Machine<br>learning/Deep learning | Search/<br>Inference/<br>Decision-<br>making | ... |
|---|---|---|---|---|

| Infrastructure | Sensor | Intelligent chip | Basic platform | ... |
|---|---|---|---|---|

IT value chain

FIG. 1

Server 100

| Client 200 | Client 200 | Client 200 |
|---|---|---|

FIG. 2

First client — Dog

Second client — Wolf

Third client — Dog — Sofa

FIG. 3

First client | Server

401: Receive a plurality of neural network modules sent by the server, and construct at least two second neural networks based on the plurality of neural network modules

402: Select at least one first neural network from the at least two second neural networks

403: Calculate an adaptation value between a first data set and a first neural network

404: Perform a training operation on the first neural network by using the first data set, to obtain a trained first neural network

405: At least one updated neural network module included in at least one trained first neural network

406: Update weight parameters of the stored neural network modules

FIG. 4

A plurality of neural network modules

| SGL1M1 | SGL1M2 | SGL1M3 | | First layer |

| SGL2M1 | SGL2M2 | SGL2M3 | SGL2M4 | Second layer |

| SGL3M1 | SGL3M2 | | | Third layer |

| SGL4M1 | SGL4M2 | SGL4M3 | SGL4M4 | Fourth layer |

FIG. 5

A plurality of neural network modules

| | |
|---|---|
| SGL1M1 | First layer |

| | | |
|---|---|---|
| SGL2M1 | SGL2M2 | Second layer |

| | | | | |
|---|---|---|---|---|
| SGL3M1 | SGL3M2 | SGL3M3 | SGL4M4 | Third layer |

| | | | | | | | | |
|---|---|---|---|---|---|---|---|---|
| SGL4M1 | SGL4M2 | SGL4M3 | SGL4M4 | SGL4M5 | SGL4M6 | SGL4M7 | SGL4M8 | Fourth layer |

FIG. 6

EP 4 202 768 A1

(a)

(b)

(c)

FIG. 7

(a)

(b)

FIG. 8

Server

| SGL1M1 | SGL1M2 | SGL1M3 | First layer |

| SGL2M1 | SGL2M2 | SGL2M3 | SGL2M4 | Second layer |

| SGL3M1 | SGL3M2 | Third layer |

| SGL4M1 | SGL4M2 | SGL4M3 | SGL4M4 | Fourth layer |

| SGL1M1 | SGL1M2 | SGL1M3 | First layer |

| SGL2M1 | SGL2M2 | SGL2M3 | SGL2M4 | Second layer |

| SGL3M1 | SGL3M2 | Third layer |

| SGL4M1 | SGL4M2 | SGL4M3 | SGL4M4 | Fourth layer |

Update

A plurality of updated neural network modules

A plurality of neural network modules

A plurality of updated neural network modules

A plurality of neural network modules

Client

First client

Calculate an adaptation value between a first data set and a first neural network, and perform a training operation on the first neural network

Select at least one first neural network

| SGL1M1 | SGL1M2 | SGL1M3 | First layer |

| SGL2M1 | SGL2M2 | SGL2M3 | SGL2M4 | Second layer |

| SGL3M1 | SGL3M2 | Third layer |

| SGL4M1 | SGL4M2 | SGL4M3 | SGL4M4 | Fourth layer |

FIG. 9

EP 4 202 768 A1

First client | Server

1001: Selector

1002: Input training data into the selector based on a first data set, to obtain indication information output by the selector, where the indication information includes a probability that each of a plurality of neural network modules is selected, and indicates a neural network module that constructs at least one first neural network

1003: First identification information, where the first identification information is identification information of the neural network module that constructs the first neural network

1004: Neural network module that constructs the first neural network and to which the first identification information points

1005: Input first training data into the selector, to obtain indication information output by the selector

1006: Obtain, based on the plurality of received neural network modules, the indication information, and the first training data, a prediction result that is of the first training data and that is output by the first neural network

1007: Perform a training operation on the first neural network and the selector based on a third loss function, where the third loss function indicates a similarity between the prediction result of the first training data and a correct result, and further indicates a dispersion degree of the indication information

1008: At least one updated neural network module and a trained trainer

1009: Update weight parameters of the stored neural network modules

1010: Update a weight parameter of the selector

FIG. 10

FIG. 11

| First client | | Server |

**1201:** Obtain at least one data subset after performing a clustering operation on a first data set, and generate at least one first clustering center that one-to-one corresponds to the at least one data subset

**1202:** At least one first clustering center ⟶

**1203:** Separately input the at least one first clustering center into a selector to obtain indication information output by the selector, and determine, based on the indication information, a neural network module that constructs at least one first neural network

**1204:** Selector and neural network module that constructs the at least one first neural network

**1205:** Input first training data into the selector to obtain indication information output by the selector, where the indication information includes a probability that each of a plurality of neural network modules is selected, and indicates the neural network module that constructs the first neural network

**1206:** Obtain, based on the plurality of received neural network modules, the indication information, and the first training data, a prediction result that is of the first training data and that is output by the first neural network

**1207:** Perform a training operation on the first neural network and the selector based on a third loss function, where the third loss function indicates a similarity between the prediction result of the first training data and a correct result, and further indicates a dispersion degree of the indication information

**1208:** At least one updated neural network module and a trained trainer ⟶

**1209:** Update weight parameters of the stored neural network modules

**1210:** Update a weight parameter of the selector

FIG. 12

Second client

Server

1301: Obtain at least one third neural network corresponding to a data feature of a second data set stored in the second client

← —— 1302: At least one third neural network ——

1303: Generate a prediction result of to-be-processed data by using the at least one third neural network

FIG. 13

1400

Machine learning model training apparatus

| Obtaining unit 1401 | Training unit 1402 | Sending unit 1403 |

FIG. 14

1400

Machine learning model training apparatus

| Calculation unit 1406 | Obtaining unit 1401 | Training unit 1402 | Sending unit 1403 |

| Receiving unit 1404 | Input unit 1405 |

FIG. 15

1600

Machine learning model training apparatus

| Obtaining unit 1601 | Sending unit 1602 | Updating unit 1603 |

FIG. 16

1600

Machine learning model training apparatus

| Receiving unit 1604 | Obtaining unit 1601 | Sending unit 1602 | Updating unit 1603 | Calculation unit 1605 |

FIG. 17

FIG. 18

FIG. 19

FIG. 20

EP 4 202 768 A1

## INTERNATIONAL SEARCH REPORT

| International application No. |
|---|
| **PCT/CN2021/107391** |

**A. CLASSIFICATION OF SUBJECT MATTER**

G06N 3/04(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, EPODOC, WPI, CNKI, ISI: 机器, 学习, 模型, 客户端, 服务器, 训练, 数据, 特性, 对应, 选取, 更新, 参数, 权重, machine, learning, model, client, server, training, data, character, corresponding, select, update, parameter, weight

**C. DOCUMENTS CONSIDERED TO BE RELEVANT**

| Category* | Citation of document, with indication, where appropriate, of the relevant passages | Relevant to claim No. |
|---|---|---|
| A | CN 110442457 A (PEKING UNIVERSITY SHENZHEN GRADUATE SCHOOL) 12 November 2019 (2019-11-12) description paragraphs [0049]-[0103], [0119]-[0126] and figures 1-3 | 1-40 |
| A | CN 111477290 A (SHANGHAI JIAO TONG UNIVERSITY) 31 July 2020 (2020-07-31) entire document | 1-40 |
| A | CN 109117953 A (BEIJING MEGVII TECHNOLOGY CO., LTD.) 01 January 2019 (2019-01-01) entire document | 1-40 |
| A | CN 110717589 A (BEIJING KUANGSHI TECHNOLOGY CO., LTD.) 21 January 2020 (2020-01-21) entire document | 1-40 |
| A | US 2019385043 A1 (ADOBE INC.) 19 December 2019 (2019-12-19) entire document | 1-40 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 October 2021** | **18 October 2021** |

| Name and mailing address of the ISA/CN | Authorized officer |
|---|---|
| **China National Intellectual Property Administration (ISA/ CN) No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/107391**

| Patent document cited in search report | | | Publication date (day/month/year) | Patent family member(s) | Publication date (day/month/year) |
|---|---|---|---|---|---|
| CN | 110442457 | A | 12 November 2019 | None | |
| CN | 111477290 | A | 31 July 2020 | None | |
| CN | 109117953 | A | 01 January 2019 | None | |
| CN | 110717589 | A | 21 January 2020 | None | |
| US | 2019385043 | A1 | 19 December 2019 | None | |

Form PCT/ISA/210 (patent family annex) (January 2015)

**REFERENCES CITED IN THE DESCRIPTION**

**Patent documents cited in the description**

- CN 202010989062